# EUROPEAN PATENT APPLICATION

(11) **EP 1 764 735 A1**
(43) Date of publication of application: **21.03.2007**
(21) Application number: 06119760.4
(22) Date of filing: 30.08.2006
(51) Int. Cl.: G06Q 30/00

(54) **Computer-based retail data management system and method thereof**

(30) Priority: 31.08.2005 US 216638
(71) Applicant: KIP Information Network, Buffalo, NY 14210 (US)
(72) Inventor: Taylor, Richard, East Aurora, 14052 (US); Taylor, William, Thornhill Ontario L3T 4K5 (CA); McClocklin, James, Richmond Hill Ontario L4E 3T6 (CA)
(74) Representative: Reichert, Werner Franz

(57) **Abstract**

The invention broadly comprises a system for managing data in a business entity and includes a computer, a central application for the business entity, a local application linked to the central application, a first interface linked to the local application, and a plurality of user interfaces located in the location and linked to the local application. The central control element is arranged to control the system and generate retail data regarding a plurality of products sold by the entity. The local application is associated with a location of the business entity and is arranged to control the system in the location and to store at least a portion of the product data. The interface is arranged to enable modification of the local application and the plurality of user interfaces is operatively arranged to exchange at least a portion of the retail data.

## Description

The invention relates generally to a distributed database application system and method for managing business data, specifically data in a retail environment. In particular, the invention relates to a system with a computer and including central and local applications and local operator interfaces. Further, the invention relates to a computer-based system providing detailed product-related information to retail customers, training and support for retail staff, and support for and monitoring of vendor staff.

It is desirable for sales associates in a retail store, particularly at "big box retailers" to provide answers to retail customers , while the customers are in the store attempting to make a purchasing decision. The following discussion focuses on big box retailers, however, it should be understood that the discussion is applicable to any retail setting. Retail customers may have questions regarding product specifications, product functions, product availability, product installation, delivery, etc. Big box retailers stock and sell thousands of items and these items are constantly being phased-out, modified, and replaced. Therefore, most sales associates may have only limited knowledge regarding the items in their own department and may have even less knowledge regarding items in other parts of the store. This problem is exacerbated by the oft-time difficulty that a retail customer has in finding a sales associate to assist them in the first place.

Another pervasive problem in big box retailers is the cost-effective training of sales associates. At present, sales associates can be trained while "on the job," that is, by learning as they sell product and interface with customers. This can be very unsatisfactory for all parties, as the training for the associate tends to be scatter-shot and lacking depth and the customer must deal with an associate who is in the process of obtaining the information necessary to properly inform the customer. Also, vendor representatives may provide training seminars. Unfortunately, "in-person" training sessions are limited to restricted time periods that may preclude staff who must be working during the time of the session or who have other non-work commitments. Prerecorded training is known, typically however, this training is done "behind the scenes," that is, associates must leave the sales floor to avail themselves of the training.

Increasing incremental sales is a goal of big box retailers. For example, certain tools or additional materials may be needed to properly install or use a product purchased by a customer. Unfortunately, the customer may not be aware of these requirements. Further, even if the customer is aware of the requirements, they may not have sufficiently specific information or know where to find the tools and additional materials in the retailer's facility.

In summary, in a typical big box retail store: it is often difficult for a customer to find a sales associate; due to the bewildering number and variety of products and the constant change in these product sales associates have limited knowledge of the products; in response to the intense competition in the industry, retailers often reduce the number of sales associates and minimize the training of the associates due to the costs associated with the training; and up-sales and add-on sales, often associated with the use or installation of a product or with projects using a product, are critical - unfortunately a sparse and ill-trained sales staff can greatly reduce up-sales and add-on sales.

Big box retailers typically require vendors to stock product, perform inventory functions, and update displays. Unfortunately, it is difficult for the retailer to track, monitor, and evaluate the activities of the vendors. Further, it is difficult to coordinate the activities of the vendors with employees at the store. For example, it is desirable to schedule vendor visits to maximize interaction/training with store employees. It also is desirable to provide a communication channel between employees and vendors.

In general, it would be advantageous for vendors to easily provide product information to a retailer, for the retailer to vertically distribute the information throughout their locations, for central and local retailer operations to access and modify data, and to enable horizontal distribution of data to customers, employees, and vendor representatives at the retailer locations.

It also would be desirable to coordinate and monitor employee training in a retail setting. As noted *supra,* live and prerecorded training seminars are problematic, and it is difficult and costly to develop, execute, and maintain a separate training regime/program kept current with all aspects of the products and services offered at a store and easily available for use by store employees.

U.S. Patent No. 6,456,981 discloses a method of advertising using a display monitor in a retail system. The method uses a kiosk, central server, and a central database. U.S. Patent No. 6,339,762 (Powell) discloses a system for creating, dispensing, and redeeming electronic coupons in a store using a smart card, product stations, and checkout stations. U.S. Patent No. 5,950,173 discloses a system and method for finding and transferring product information over the Internet to consumers in retail settings, at home, or on the road. U.S. Patent No. 5,845,256 discloses a system for vending insurance policies using self-service terminals connected to a central office. U. S. Patent No. 4,528,643 discloses a system for reproducing information in material objects at a POS location. Unfortunately, these references do not teach a link between vendors and a database function for a retailer, a vertical data network comprising a central database function and local database functions, determination of ancillary products to support incremental sales, or communication with customers, employees or vendors from a same device at a retailer location.

U.S. Patent No. 6,442,530 discloses a system for using a retail self-service terminal to locate selected retail items. The terminal is connected to an in-store computer containing item locations. U.S. Patent No. 6,250,452 discloses a system for monitoring a plurality of remote product dispensers. U.S. Patent No. 6,183,362 discloses a customer tracking and recognition program. Customer data is gathered using LAN-based management systems, sent to a central database, and made available to a plurality of casinos. Unfortunately, these references do not teach a link between vendors and a database function for a retailer, a vertical data network comprising a central database function and local database functions, determination of ancillary products to support incremental sales, or communication with customers, employees or vendors from a same device at a retailer location.

U. S. Patent Application Publication 2005/0021509 discloses a system for developing and maintaining user interface screens for a computer-based information system. U.S. Patent Application Publication 2004/0103031 discloses a kiosk with a computer, keyboard, and monitor to provide a graphic display of a floor plan and a perspective view of the item's location. U. S. Patent Application Publication 2004/0019535 discloses an intemet-based kiosk in a retail environment for collecting and delivering product information to retail customers. Unfortunately, these references do not teach a link between vendors and a database function for a retailer, a vertical data network comprising a central database function and local database functions, determination of ancillary products to support incremental sales, or communication with customers, employees or vendors from a same device at a retailer location.

U. S. Patent Application Publication 2005/0010485 et al. discloses a multimedia, interactive kiosk system for use in obtaining information and interacting with third parties/providers. A database at the kiosk is periodically updated. Unfortunately, this reference does not teach a vertical data network comprising a central database function and local database functions, determination of ancillary products to support incremental sales, retailer access to the system at the central and local levels, or communication with customers, employees, or vendors from a same device at a retailer location.

The following references are primarily directed to on-line shopping or interactions and communications between customers and vendors and are less applicable to a retail location. In general, these references do not teach the desirable aspects of a link between vendors and a database function for a retailer, a vertical data network comprising a central database function and local database functions, determination of ancillary products to support incremental sales, or communication with customers, employees or vendors from a same device at a retailer location. U. S. Patent No. 6,546,374 discloses an Internet or wireless based system for connecting customer and vendor computers. The system allows customers to express interest and vendors to supply information regarding customer interests. U. S. Patent No. 6,415,261 discloses a method for managing a frequent shopper program for both web-based and in-store shopping. The method uses a POS system, POS databases, and on-line shopping databases. U. S. Patent No. 6,023,684 discloses a three-tier financial transaction system. Pearson interfaces client programs over an open network to legacy databases in a computer system for a financial institution. U. S. Patent No. 5,893,093 discloses building an index of coordinates for a plurality of references, sources, or sites and then locating a reference within the index in response to an inquiry. U. S. Patent Application Publication 2004/0128199 discloses a system and method to facilitate real-time, web-based POS operations such as sales and reporting. The system includes a central database and a plurality of POS stations that interact with the database and retrieve data from the database. The database also manages data responsive to the POS stations. U. S. Patent Application Publication 2002/0052000 discloses a system for distributing scheduling content using a network. The content can be configured in a database and the distribution of the content to outlets also can be configured. This reference may be cited regarding the display of information from a database to a user interface.

U. S. Patent Application Publication 2003/0158796 discloses a business method using a software program for speeding and improving selecting, acquiring, and tracking items from an existing supply chain, marketing and controlling use of items, and transferring information regarding products. U. S. Patent Application Publication 2003/0158792 discloses a system and method for finding and transferring product information to consumers over the Internet. The system indexes product UPCs and URLs for product locations. U. S. Patent Application Publication 2002/0128859 discloses a system and method for finding and transferring product information to consumers over the Internet. The system indexes product UPCs and URLs for product locations. URLs contain data such as product specifications and product retailers. U. S. Patent Application Publication 2002/0077927 discloses an Internet shopping system and method that enables a variety of business transactions such as information exchange and product return. U. S. Patent Application Publication 2002/0059104 discloses a network-based shop sales system for selling an article to a user terminal. The shop includes an article storage apparatus connected through a communication line.

The following references are primarily directed to inventory activities and are only nominally related to the problems cited *supra.* U. S. Patent No. 6,023,684 discloses a method for monitoring the receipt and stocking of goods in a direct store delivery by storing and comparing various counts, such as vendor and clerk counts. U. S. Patent Application Publication 2002/0147667 discloses a distribution control system and method including a main server controlling stock reserves in a branch warehouse.

Thus, there is a long-felt need for a distributed database application to provide complete and accurate information to retail customers and sales associates regarding products sold by a retail entity, to help offset the trend toward reducing retail sales staff, to manage and maximize training of sales associates, and to increase up-sales and add-on sales. There also is a long-felt need to better managing personnel associated with retail sales entities. Another long-felt need is for a system implementing the above functions in an automated, easily accessible, easily used, and continuously updated manner. Also, there is a long-felt need for a system to monitor vendor activities in a retail environment.

The invention broadly comprises a system for managing data in a business entity by using a computer. The system includes a central application for the business entity, a local application linked to the central application, a first interface linked to the local application, and a plurality of user interfaces located in the location and linked to the local application. The central application includes a control and a central storage element. The central control element is arranged to control the system and generate retail data regarding a plurality of products sold by the entity. The central storage element is arranged to store product data regarding the plurality of products sold by the entity. The local application is associated with a location of the business entity and comprises a local control element arranged to control the system in the location and a local storage element arranged to store at least a portion of the product data. The interface is arranged to enable modification of the local application and the plurality of user interfaces is operatively arranged to exchange at least a portion of the retail data. The central application, local application, first interface, and plurality of user interfaces are located in at least one specially programmed general-purpose computer.

In some aspects, a first vendor provides a first product from the plurality of products and the plurality of user interfaces is operatively arranged to exchange employee and vendor information. By employee information we mean information regarding an employee of the entity, for example, training information. By vendor information we mean information regarding the first vendor, for example, activities of a representative of the vendor in a local location of the business entity. The local application further comprises a publicly accessible level for managing the retail data and respective security levels for managing the employee and vendor information. In some aspects, the employee information comprises training information for the employee and the vendor information comprises information regarding an activity of a representative of the first vendor.

In some aspects, the system includes a vendor control element linked to the central application. A second vendor provides a second product from the plurality of products and a third product from the plurality of products is associated with the second product. The vendor control element is arranged to accept information regarding the second and third products from the second vendor, to select a fourth product, corresponding to the third product, from the plurality of products, and to correlate the second and fourth products in the retail data. The vendor control element is located in the at least one computer.

In some aspects, a second interface is linked to the central application. The second interface arranged to enable the entity to modify the central application and the second interface is located in the at least one computer.

In some aspects, the central application is linked to a supply chain database. The supply chain database is separate from the entity and stores supply chain information regarding at least a portion of products in the plurality of products. The central application is arranged to retrieve and store the supply chain data. In some aspects, the supply chain database is the Uniform Code Council UCCnet database.

The invention also broadly comprises a method for managing data in a business entity by using at least one computer.

It is a general object of the present invention to provide a computer-based method and system to integrate and manage data both vertically and horizontally in a business entity.

It is another object of the present invention to provide a computer-based method and system that is easy for customers to access and use, is continuously updated from local and central applications, is configurable on a local level, and provides detailed and interactive displays regarding products and services offered by a retail entity.

It is still another object of the present invention to provide a computer-based method and system to provide sales associates with training and product support, while providing a means to monitor employee activities.

It is yet another object of the present invention to provide a computer-based method and system to track, monitor, and assess vendor activities with respect to a retail entity, while providing a communication channel between retail staff and vendor staff.

These and other objects and advantages of the present invention will be readily appreciable from the following description of preferred embodiments of the invention and from the accompanying drawings and claims.
Figure 1 is a block diagram of a present invention distributed database application for vertical and horizontal management of data in a business entity;
Figures 2 through 28 are pictures of a screen in a user interface of the present invention showing a sequence of customer interactions regarding products, services, and a store map associated with a retail entity;
Figures 29 through 36 are pictures of a screen in a user interface of the present invention showing a sequence of customer interactions regarding projects supported by a retail entity;
Figures 37 through 39 are pictures of a screen in a user interface of the present invention showing a sequence of customer interactions regarding services offered by a retail entity;
Figures 40 through 44 are pictures of a screen in a user interface of the present invention showing a sequence of interactions with an employee of a retail entity;
Figures 45 and 46 are pictures of a screen in a user interface of the present invention showing a sequence of interactions with a vendor representative; and,
Figures 47 through 68 are pictures of a screen for the vendor control element of the present invention.

At the outset, it should be appreciated that like drawing numbers on different drawing views identify identical, or functionally similar, structural elements of the invention. While the present invention is described with respect to what is presently considered to be the preferred aspects, it is to be understood that the invention as claimed is not limited to the disclosed aspects.

Furthermore, it is understood that this invention is not limited to the particular methodology, materials and modifications described and as such may, of course, vary. It is also understood that the terminology used herein is for the purpose of describing particular aspects only, and is not intended to limit the scope of the present invention, which is limited only by the appended claims.

Unless defined otherwise, all technical and scientific terms used herein have the same meaning as commonly understood to one of ordinary skill in the art to which this invention belongs. Although any methods, devices or materials similar or equivalent to those described herein can be used in the practice or testing of the invention, the preferred methods, devices, and materials are now described.

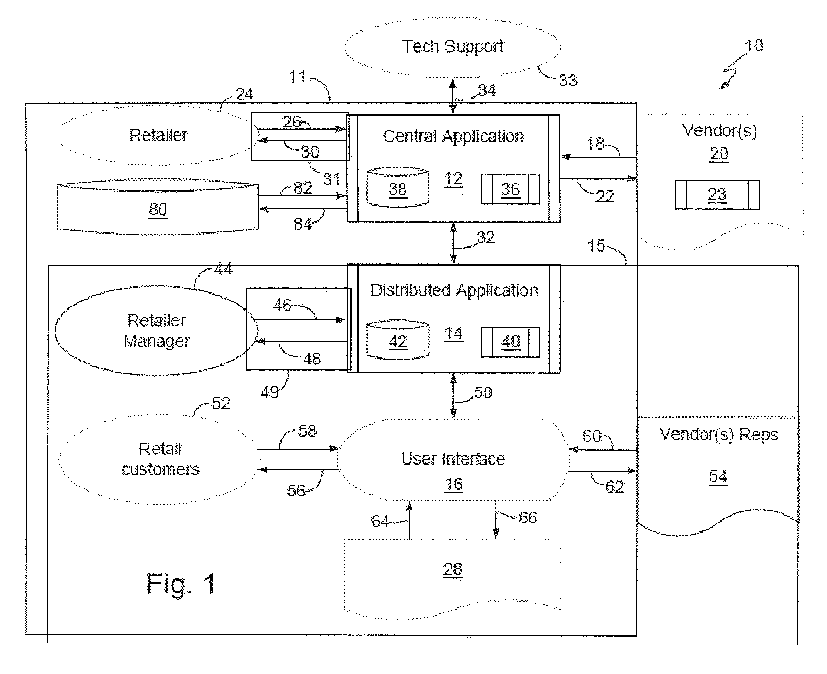

Figure 1 is a block diagram of a present invention distributed database application 10 for vertical and horizontal management of data in a business entity. Hereinafter, distributed database application 10 is referred to as system 10. System 10 is computer-based and the various components described below are located in or are otherwise part of one or more specially programmed, general-purpose computers (not shown). In general, system 10 is applicable to a business entity 11 and includes central database application 12, hereinafter referred to as application 12, and at least one local database application 14, hereinafter referred to as application 14. Only one application 14 is shown in Figure 1. However, it should be understood that any number of applications 14 can be connected to application 12. In general, each application 14 is associated with a particular location 15 of a business entity. However, in some aspects (not shown), a single application 14 is associated with more than one location. In general, communication between applications 12 and 14 is two-way, as further explained below. It should be understood that any means known in the art can be used for the hardware structure of applications 12 and 14. For example, applications 12 and 14 can each be a server with an arithmatic logic unit and data storage.

At least one user interface (UI) 16 is connected to application 14. In the invention aspect shown in Figure 1, UI 16 is stateless. That is, control operations and data storage are performed in application 14, rather than UI 16. In some aspects (not shown), portions of the control operations are executed in UI 16 and some data is stored in UI 16. That is, portions of the application and content associated with application 14 and described below are located in UI 16. UI 16 may include a terminal, smart card reader, UPC reader, and a printer, as further described below. Any means known in the art can be used for UI 16. Further, UI 16 can be a stationary device, affixed to a shopping cart, or a handheld device.

System 10 can be web-based, use networks such as WANs or LANs, or be partially web-based and partially network-based. For example, applications 12 and 14, which may be located at a considerable distance from each other, could be web-based, while application 14 and UI 16 could be located in the same store and connected by a LAN. Connections between elements in system 10 can be hardwired (wire or cable) or radio-frequency (wireless).

In should be understood that system 10 is applicable to a wide variety of business entities or other organizational structures with which data management is associated. However, for the following description, an example of system 10 in a retail entity is presented. In general, application 12 accepts product information in data stream 18 from vendors 20. Product information can include specifications, descriptions, and installation information. Application 12 also supplies data to vendors 20 in data stream 22. Data in stream 22 includes sales trends related to vendor products and performance data for vendor representative performing work in a retailer's locations. Data streams 18 and 22 can use standard computer interfaces.

In some aspects, vendor control element 23 is linked between vendor 20 and application 12. In some aspects (not shown), element 23 is linked to application 14. In Figure 1, element 23 is shown with vendor 20. However, it should be understood that element 23 also could be located in entity 11, for example, in application 12. Element 23 is used by vendor 20 to provide information to application 12 regarding products or services provided by vendor 20 to entity 11. Element 23 provides a standardized format for organizing and grouping product/service information and through the use of element 23 information from a wide variety of vendors can be entered in application 12 in a predictable format. Application 12 parses the information from element 23 and distributes/stores the information as described below in the operations for applications 12 and 14.

In some aspects, vendor control element 23 performs an additional function of correlating a particular product/service supplied by vendor 20 with other products/services offered by entity 11. For example, vendor 20 inputs general data to element 23 regarding tools and materials necessary to install a product supplied by vendor 20. Element 23 then identifies specific tools and materials provided by entity 11 and corresponding to the tools and materials necessary to install a product. Information regarding the identified tools and materials, such a brand name, price, and position in location 15 are provided by application 12 via UI 16 as described below.

Retailer 24 supplies data to application 12 in data stream 26. In general, retailer 24 is a centralized location or function of the subject retail entity, for example, a headquarters. Retailer 24 provides data such as training information or regimes for retailer employees 28 and knowledge base in stream 26. Data streams 26 and 30 can be implemented by interface 31. Application 12 provides information to retailer 24 regarding customer behaviors, such as product preferences and retail trends, in data stream 30. Interface 32 links applications 12 and 14. Application 12 generates the information in stream 30 at least partly from information received from application 14 through interface 32. Interface 32 supports a two-way stream. Data flow from application 14 to application 12 is described below. Technical support 33 accesses application 12 through interface 34 to provide maintenance, updates, and other required activities. In general, support 33 is an entity separate from entity 11 and located remote from entity 11, although other arrangements are possible.

Application 12 includes application or central control element 36 and data storage or central storage element 38. Application 36 includes the software/commands to implement the functions of system 10, while data storage 38 is the central repository for data in system 10, for example, data accessed by applications 12 and 14 and UI 16. In general, the data produced by control element 36 is referred to as retail data. Data in storage 38 includes vendor information provided through stream 18 and retailer information provided through stream 26. Application 12 provides all or portions of application 36 and the data in data storage 38 to application 14 through interface 32.

Application 14 includes application or local control element 40 and data storage or local storage element 42. Application 12 downloads appropriate portions of application 36 to application 14. These appropriate portions include the portions necessary to control and direct the operation of system 10 in location 15. In some aspects, application 40 is the same as application 36. In some aspects, applications 12 and/or 14 modify the downloaded version of application 36 to form application 40. Application 12 also downloads at least portions of the data in data storage 38 to form data storage 42. In general, the information downloaded from storage 38 to storage 42 is regarding products sold in location 15 and operations in location 15. In some aspects, application 12 downloads changes to application 36 and/or storage 38 at predetermined intervals. In this manner, information in application 14 is automatically kept current.

Retailer manager 44 provides information to application 14 in data stream 46. In general, retailer manager 44 is associated with the operation of location 15. Data provided by retailer 44 includes changes to the configuration of application 40 and changes to content 42 to reflect the specific requirements and preferences of the subject location and manager 44. For example, data in stream 46 can be regarding pricing of products sold in location 15 or the status of employee 28. Application 14 provides information to manager 44 in data stream 48. This information is described below. Data streams 46 and 48 can be implemented by interface 49.

Interface 50 links application 14 to UI 16. In those aspects in which UI 16 is stateless, UI 16 acts as a conduit to application 14, which performs required computational operations and stores information as necessary. Interface 50 is a two-way interface. Further, information provided to application 14 through interface 50 can be uploaded to application 12 through interface 32. In general, UI 16 provides a visual and audio display for use by retail customers 52, vendor reps 54, and retail employees 28. Application 14 executes the commands necessary for UI 16 to display and download the appropriate data through interface 50. Customer 52 receives information, such as product pricing and customer support, for example, alternatives to a selected product, project bills of materials, and product location maps, from UI 16 in data stream 56. Product information may be sorted and displayed by product name, product categories, manufacturer's categories, store departments, or any other manner known in the art. Customer 52 can input information, for example, regarding desired products, and query UI 16 through data steam 58. For example, a customer can input data regarding a particular project to assist system 10 in computing a bill of materials for the project. Vendor reps 54 provide information, such as the number of retail locations visited by rep 54, tasks accomplished by rep 54, and time spent at location 15 by rep 54, to UI 16 in data stream 60. Rep 54 also can communicate with retail manager 44 and retailer 24 through UI 16. Employee 28, retail manager 44 and retailer 24 can provide messages or instructions to rep 54 through data stream 62.

Employee 28 provides information, such as a query regarding a product or service offered by entity 11, a response to training information, and information regarding a task performed by the employee to UI 16 in data stream 64. Employee 28 also can query UI 16 to obtain information to assist customers 52. UI 16 provides: training information, for example, safety training, policies and procedures, customer service training, and product knowledge training; and responses to employee queries in data stream 66. Information provided in stream 48 can be obtained from streams 58, 60, and 64.

In some aspects, UI 16 manages data exchanges between customer 52, employee 28, and rep 54 at different security levels. In general, customers 52 access the system at a publicly accessible security level, that is, without a card, password, or other restrictions. In some aspects, employee 28 and rep 54 exchange data at higher security levels. For example, access at these levels can be restricted to those providing information such as a password. To facilitate restricted access, UI 16 may include a terminal or smart card reader, UPC reader, a printer, or any other means known in the art. Smart card enable employee 28 and vendor rep 54 to access different and/or more sensitive levels of access inappropriate for customer 52. Also, smart cards can quickly and easily activate custom configurations specific to particular employees 28 or reps 54. For example, an employee could have a card activate a specific training regimen. Customer 52 also may use a smart card which identifies the customer to system 10 and enables system 10 to track the activities of customer 10 in UI 16 and provide benefits to customer 52, such as counting loyalty points or showing historical customer preferences. A UPC reader enables employee 28 or customer 52 to quickly and accurately input product identifiers to receive product information or alternatives to the product that has been scanned. A printer is included to provide a hard copy of items displayed on the screen, for example, a bill of materials or a product location in the store.

In some aspects, UI 16 is a touch screen interface, eliminating the need for a keypad and making the terminal more user-friendly. Pictures of displays from a touch screen interface for UI 16 are shown below. A touch screen user interface can include a simplified start screen with the minimally necessary number of buttons to guide the user. The buttons can be sized to avoid overlap, for example, making the buttons at least twice the size of the tip of an average index finger. In general, each subsequent screen includes navigation buttons. These buttons can further focus a search, return to a previous screen, view a store map, or start the search over from the beginning. Lastly, upon selection of the desired products, a shopping list may be generated for future reference. In a similar manner, information regarding product usage, project information, and bills of material also may be produced. Retail employees and vendors also use the touch screen.

It should be understood that any means known in the art can be used to access UI 16 at each of the levels described *supra.* For example, in addition to the means described *supra,* voice activation and biometric means can be used to access UI 16.

In some aspects, system 10, in particular, application 12, is linked to supply chain database 80. In some aspects (not shown), database 80 is linked to application 14. This linkage can be implemented by any method known in the art, as described above for system 10. Database 80 is maintained by an entity separate from entity 11, although entity 11 may be affiliated with entity 11. In general, database 80 stores detailed information, in a standardized format, regarding products sold by entity 11. Database 80 addresses the problem of inaccurate supply chain data. The standardized format for data is shared from business to business, for example, among entity 11 and the suppliers of products sold by entity 11.

Database 80 supplies information to application 12 in data stream 82. Application 12 communicates with database 80 via data stream 84, for example, querying database 80 regarding product updates. In some aspects, application 12 retrieves updated information from database 80 at predetermined intervals. In some aspects, database 80 supplies information to application 12 as applicable information in database 80 is updated. In some aspects, database 80 is the UCCnet Database provided by the Uniform Code Council. Information received from database 80 is parsed by application 12 and distributed between applications 12 and 14 as applicable.

In some aspects (not shown), application 12 is linked to more than one retailer, and, consequently, to respective applications 14 and UI 16s for each retailer.

In general, system 10 provides a seamless means of integrating and exchanging data both vertically and horizontally in a business entity. For example, data can be exchanged vertically between applications 12 and 14 and UI 16. That is, the applications and interface are at different locational and functional levels, which can be difficult to interface due to physical or organizational constraints. Regarding horizontal exchange, vendor 20 and retailer 24 can access application 12, retailer 44 can access application 14, and employee 28, customer 52 and vendor representative 54 can exchange information with UI 16. Further, horizontal and vertical data is integrated. For example, vendor 20 adds data regarding a product via stream 18, application 12 modifies storage 38 accordingly and provides the modified data for storage 42 in application 14. Manager 44 configures application 40 via stream 46 to provide a specific portion of the product data in response to employee queries. Employee 28 queries UI 16 regarding the product, application 14 supplies information regarding the product from content 42 per the configuration of application 40, and UI 16 displays the product. In response to the query, application 14 provides data to manager 44 regarding the activity of employee 28 on stream 48. Thus, virtually every level in a business entity is connected via system 10 and a plethora of interactions are made available to the various levels.

Alternately, system 10 can be viewed as enabling the exchange of some or all of a central set of data among various levels of a business entity. For example, assuming entity 11 includes a composite set of data (not shown), applications 12 and 14 exchange at least a portion of the set via 32, application 12 exchanges at least other respective portions of the set via stream pairs 18/22 and 26/30, respectively. Application 14 exchanges other respective portions of the set via interface 50 and stream pairs 56/58, 60/62, and 64/66. It should be understood that a particular portion can contain all or only a part of the composite set of data.

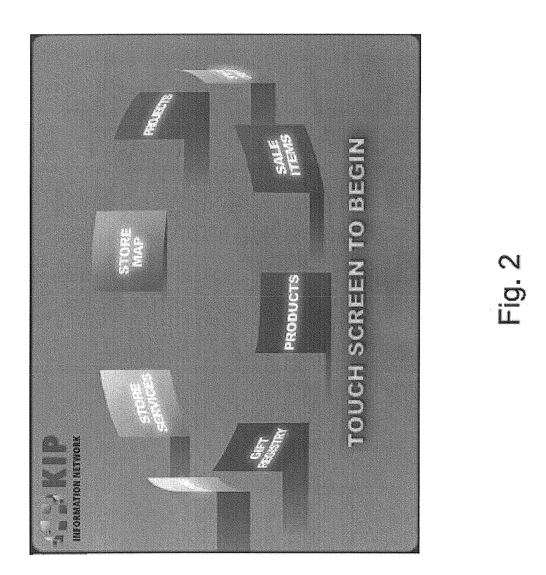

Figures 2 through 68 are pictures of a screen in a user interface of the present invention showing interactions with retail customers, retail employees, and vendor representatives. In general, Figures 2 through 68 are regarding the retail data referenced in the description of Figure 1. In some aspects, system 10 is used in a retail environment and Figures 2-68 show system 10 in a home improvement store. However, it should be understood that system 10 is not limited to use in a retail environment and particularly is not limited to a specific type of retail environment. Further, it should be understood that system 10 is not limited to the searches and interactions shown in Figures 2-68. Therefore, other types of searches and interactions are within the spirit and scope of the claims. It also should be understood that system 10 is not limited to the media configurations and graphical displays shown in Figures 2-68 and that other media configurations and graphical displays are within the spirit and scope of the claims.

Figures 2 through 28 are pictures of screens in a user interface of the present invention, showing a sequence of customer interactions regarding products, services, and a store map associated with a retail entity. The following should be viewed in light of Figures 1 through 28.

Figure 2 is a picture of an initial display screen for UI 16. Figure 2 shows one example of a sleeper screen or screen saver for UI 16. The display in Figure 2 can be designed to reflect the culture of retailer 24. For example, the retailer's logo could be displayed in Figure 2. A user touches the screen shown in Figure 2 to generate the display shown in the next figure.

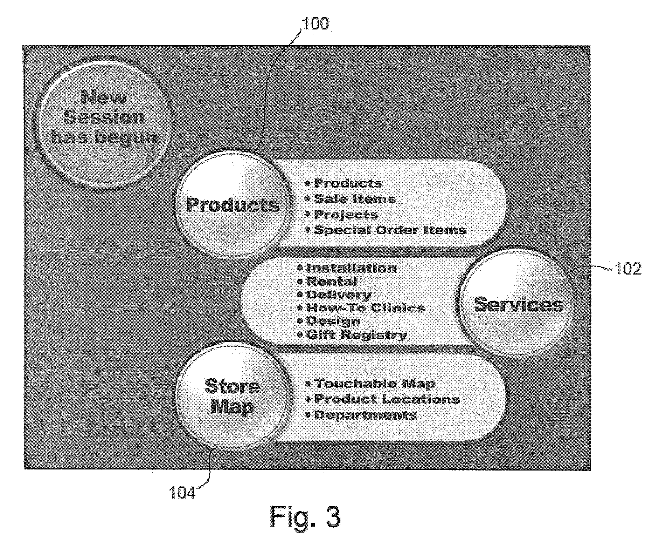

Figure 3 is a picture of a main screen on UI 16. A user can choose from buttons 100, 102, or 104 to initiate a session. Each button contains a list of bullet points outlining what the user will find behind each button. Both "Products" button 100 and "Store Map" button 104 eventually can lead a user to a same screen. This convergence minimizes the number of areas in which a user could potentially get lost. A user touches button 100 in Figure 3 to generate the display shown in the next figure.

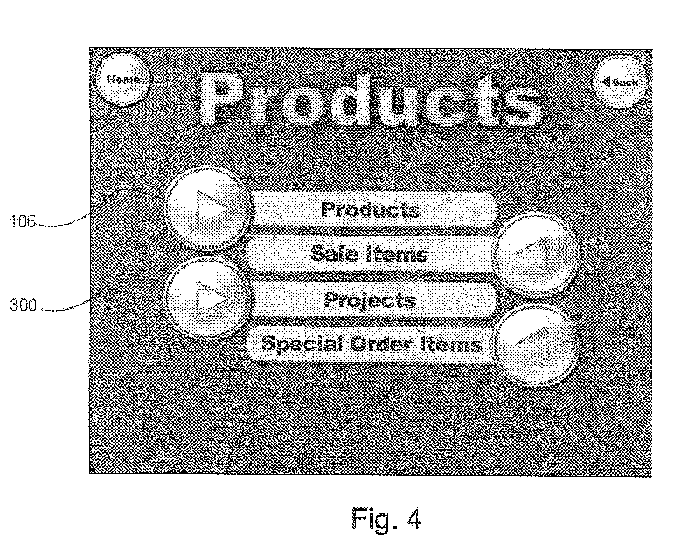

Figure 4 is a picture of a main products screen. A user touches button 106 in Figure 4 to generate the display shown in the next figure.

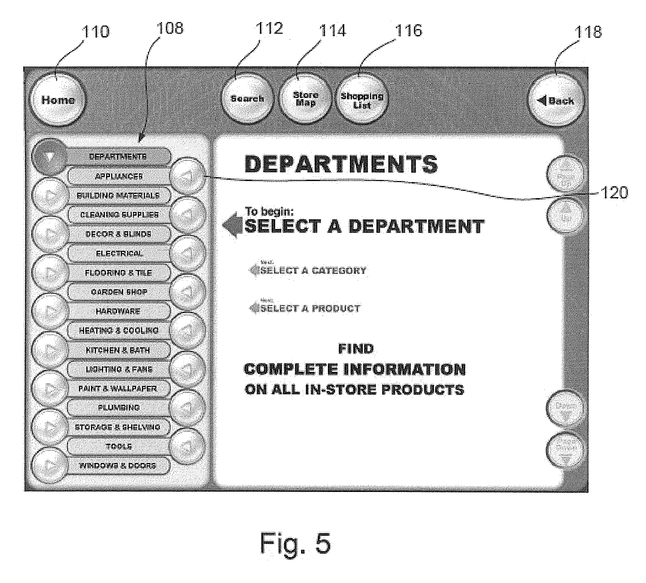

Figure 5 is a picture of the main department screen. Figure 5 shows a list of all departments found within a typical home improvement store. "Butterfly Buttons" 108 enable a large number of departments to fit on a single screen, eliminated the need to scroll down on the page. Butterfly buttons 108 enable more information to be displayed on a page without making the page look cluttered or hard on the eyes. Butterfly buttons 108 also enable a customer to visually scan and process the information vertically, which is much faster and easier than horizontal scanning. The departments are categorized in alphabetic order, although other arrangements can be used. In general, simple instructions and buttons are provided on the right side of the screen. Once the user gets to this screen, the following buttons: "Home" 110, "Search" 112, "Store Map" 114, "Shopping List" 116, and "Back 118" remain in fixed positions on subsequent screens. A user touches button 120 in Figure 5 to generate the display shown in the next figure.

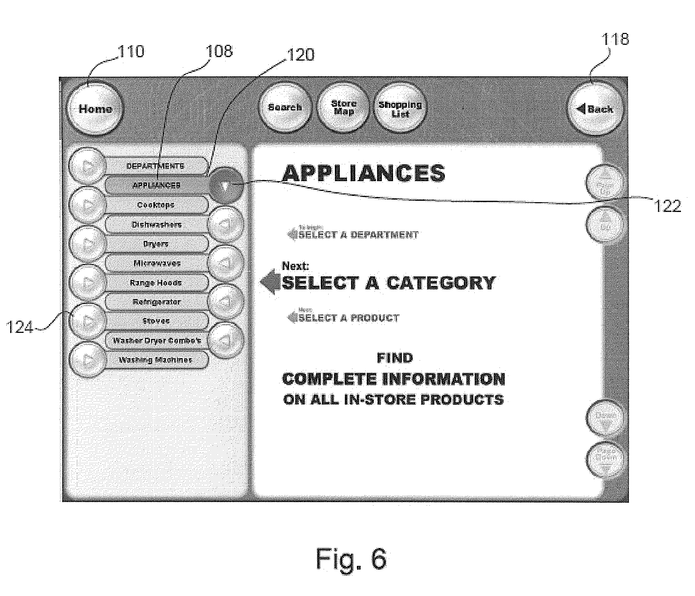

Figure 6 is a picture of a department page. Specifically, Figure 6 is an appliance department page. Button 120 changes hue to indicate that it has been selected. Triangle 122 inside the circular part of button 120 turns and points downward to prompt the user to make a further selection from the buttons displayed below button 120. The history within a department screen is left in a different hue, allowing the user to easily go back a step or two. In general, the same functions for triangles inside buttons and changes in hue are used in the figures that follow. If a user makes a wrong selection, the user can select "Back" button 118 or "Department" butterfly button 108 to get back to the screen shown in Figure 4. Also, at any time, a user can select "Home" button 110 to return to the screen shown in Figure 3. In general, session history is displayed above the button last selected by the user in a particular screen, allowing the user to easily go back to previous steps. For example, a user selected button 120 in the previous screen and in the present screen, the history is displayed above button 120. A user touches button 124 to generate the next display.

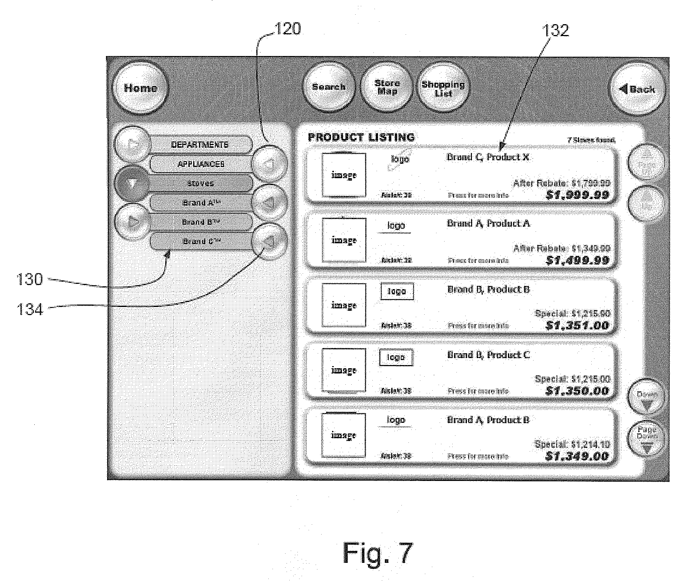

Figures 7 through 10 show a sequence for obtaining information about a specific product. The information displayed in Figures 7-11 can be supplied by vendor 20, using element 23, in data stream 18. In Figure 7, a user can search by brand buttons 130 or product listings 132. Currently, product listing is organized by price, highest to lowest, however, it should be understood that other configurations are possible. The product listing provides basic information about the product such as Brand and Model, Price, Location (Aisle #), and an image of the product. A user touches box 134 to generate the next display.

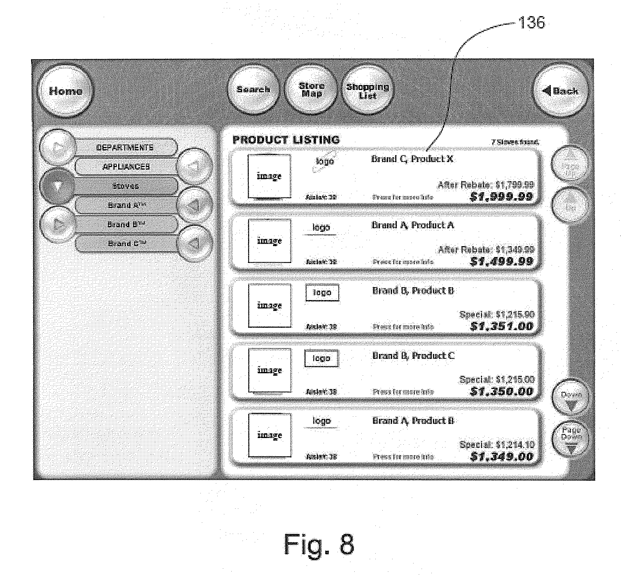

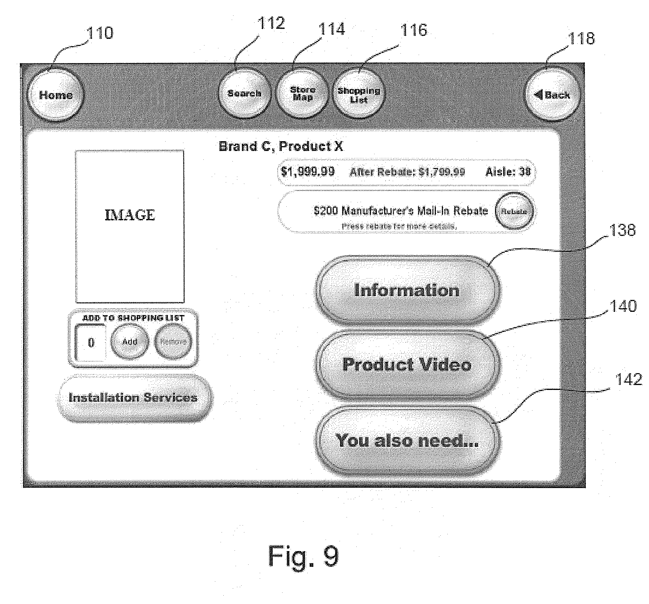

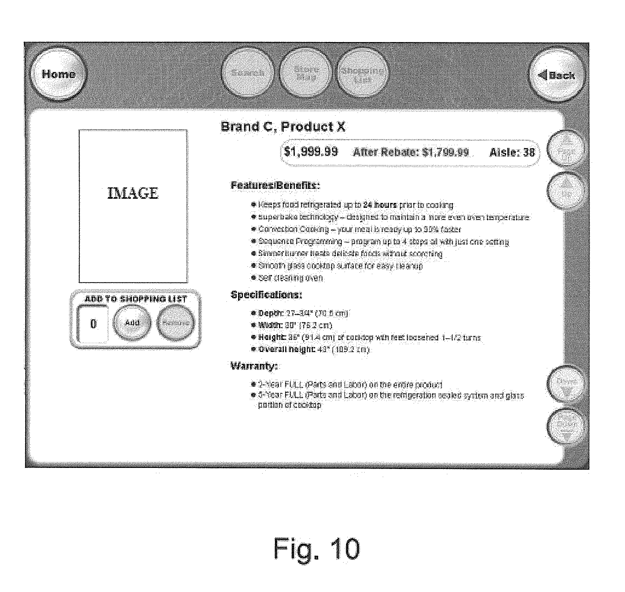

Figure 8 shows products within the brand chosen in the previous figure. A user touches button 136 to generate the next display. Figure 9 enables the user to access specific information pertaining to the product selected in the previous screen. Figure 9 presents three main selection buttons: Information 138, Product Video 140, You Also Need... 142. In some aspects (not shown) there are products without button 140. Once the user has entered into one of the three main categories on this page, "Search" 112, "Store Map" 114, and "Shopping List" 116 buttons are disabled, forcing the user to either return to the Main Product Page by selecting "Back" button 118, or to return to the beginning of the application by selecting "Home" button 110. In general, this configuration of the preceding buttons is maintained during a product search. A user touches button 138 to generate the next display. Figure 10 displays detailed information regarding the selected product model. If a user selects button 140 in the Figure 9, a video is displayed (not shown). The user can manipulate the video by playing, fast forwarding, rewinding, pausing, stopping and re-playing at anytime. The volume can be adjusted up or down by the user. If a user touches button 142 in Figure 9, the next screen is displayed.

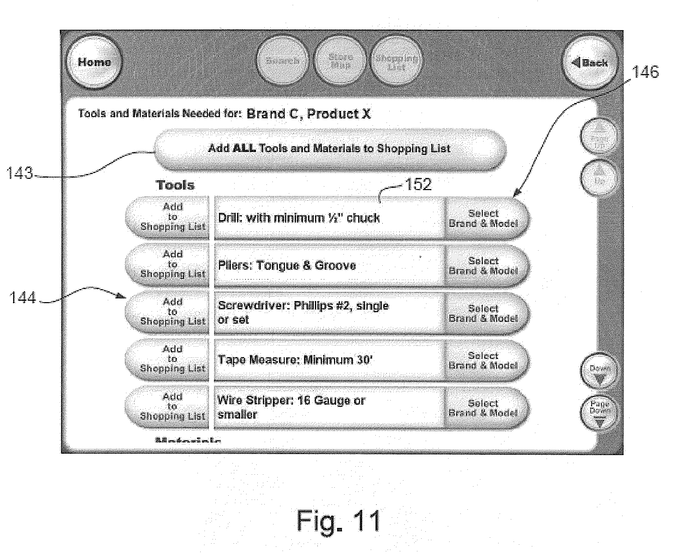

Figures 11 shows Tools, Materials, and design aids to build, install, or use a product. For example, this screen shows the items required to install the product selected in Figure 8. The user can select the "Add ALL Tools and Materials to Shopping List" button 143, which will add all the items needed for the stove installation to the shopping list. Alternately, the user can select the individual "Add to Shopping List" buttons 144, found on the left side of tool/material descriptions and individually add the tools/materials to their shopping list. Both of these methods for adding tool/materials to the shopping list generally function as a reminder to buy the tool/material. The user also can choose the "Select Brand & Model" buttons 146 to choose a specific brand, model, etc. to be added to their shopping list. Element 23 is used to identify the tools/materials and to select the specific brand, model, etc., as further described below. The user selects button 142 to generate the next display.

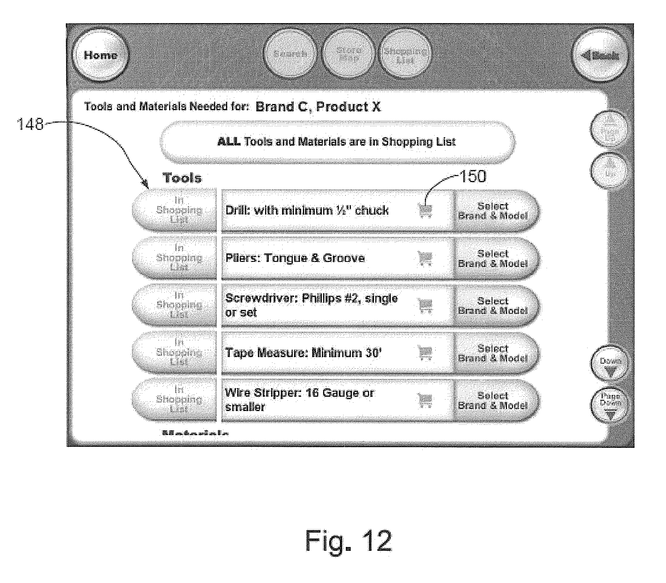

In Figure 12, there are a few visual cues that appear once button 143 has been selected. All the "Add to Shopping List" buttons found on the left side of the tool/material description change to read "In Shopping List" 148 and a shopping cart icon 150 is added to each tool/material description. The user selects this icon if they wish to send a reminder to their Shopping List of all the tools/materials associated with Product X and does not want to take the time to select a brand and model for each tool/material.

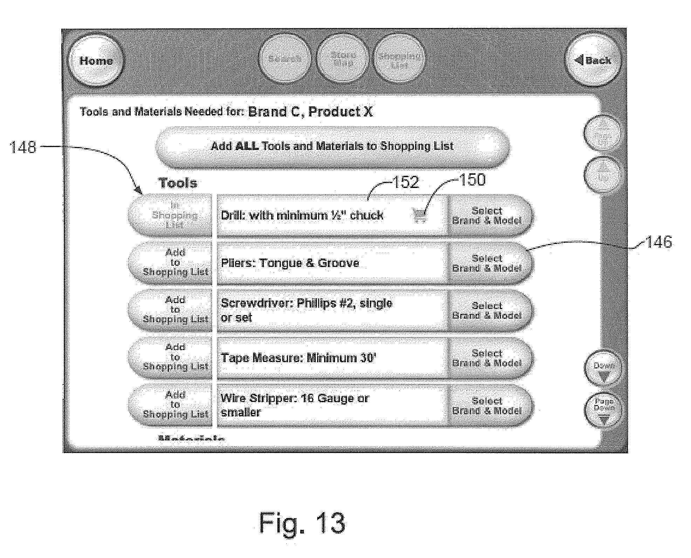

To generate the display in Figure 13, the user selects "Add to Shopping List" button 144 in Figure 11 for the "Drill: Minimum ½ chuck" 152. The "Add to Shopping List" button 148 found on the left side of 152 changes to read "In Shopping List." Shopping cart icon 150 is added to the tool/material description. This button allows the user to individually select the tools/materials they want to be reminded of on their Shopping List.

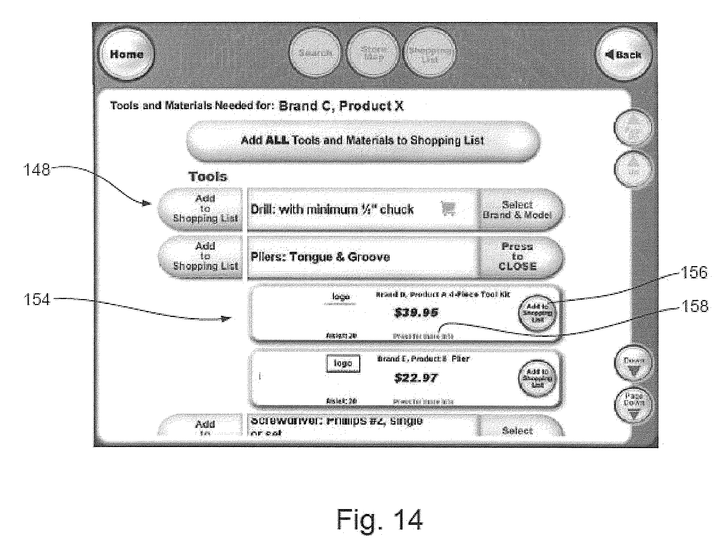

To generate the display in Figure 14, the user selects "Select Brand & Model" button 146 for the "Pliers: Tongue & Groove" in Figure 13. The products selected by button 146 appear below the tool/material description, allowing the user to view the basic information 154 for those items and allowing them to select the product(s) for more information. A user selects "Add to Shopping List" button 156 to add to add a product to a shopping list.

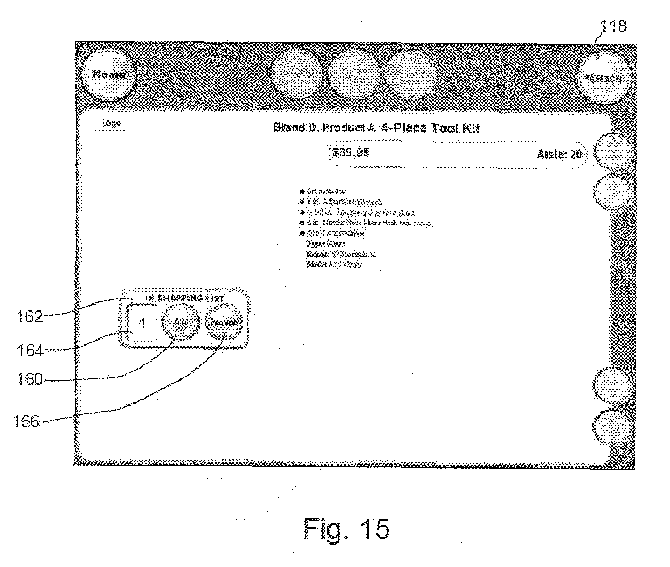

To generate the display in Figure 15, the user selects "press for more info" 158 in Figure 14. This screen displays further information regarding the "You Also Need Item." From this screen the product can be added to a shopping list by "Add" button 160. Bar 162 allows the user to adjust the quantity 164 to be added to their shopping list. Selecting "Add" button 160 allows for a multiple number of the same product to be added, while the "Remove" button 166 removes one product at a time from the shopping list.

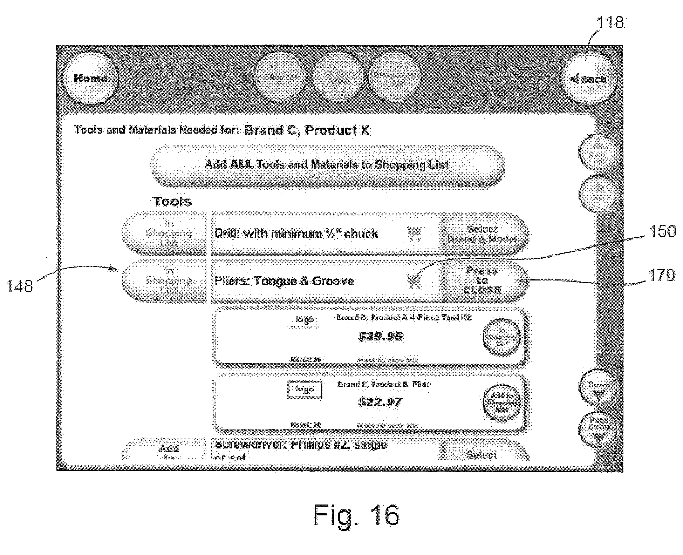

To generate the display in Figure 16, the user selects "Back" button 118 in Figure 15. Visual cues in this screen show the user that they have added the Brand D, Product A to the shopping list. The "Add to Shopping List" buttons 148 found on the left side of the tool/material description changes to read "In Shopping List." Shopping cart icon 150 is added to the tool/material tab. The user can now select "Press to Close" button 170 to close the list of pliers and continue to select more tool/materials or go back to Figure 4 (Main Product Page) by selecting "Back button" 118.

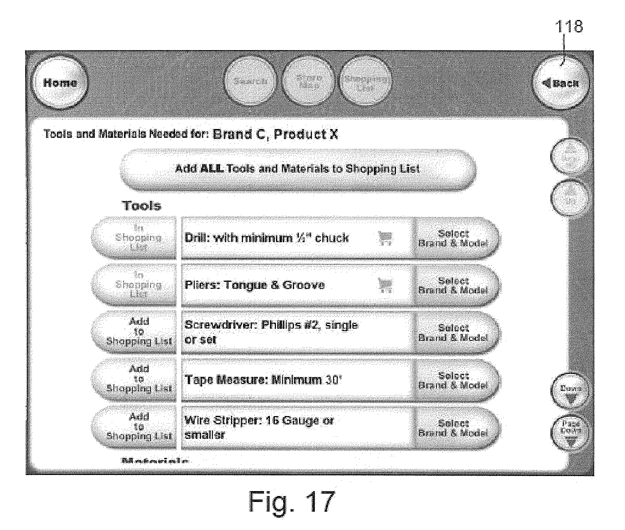

To generate the display in Figure 17, the user selects "Press to Close" button 170 in Figure 16. The user can clearly see that two items have been added to their Shopping List.

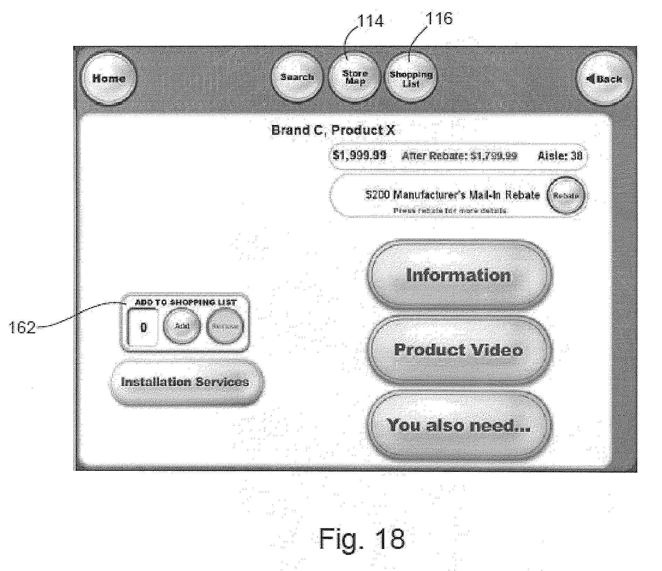

To generate the display in Figure 18, the user selects "Back" button 118 in Figure 17. At the Main Product Screen, the use can select "Shopping List" 116 button to see what has been added to the shopping list or can select "Store Map" button 114 to see the location of all the products in the shopping list and the location of Product X.

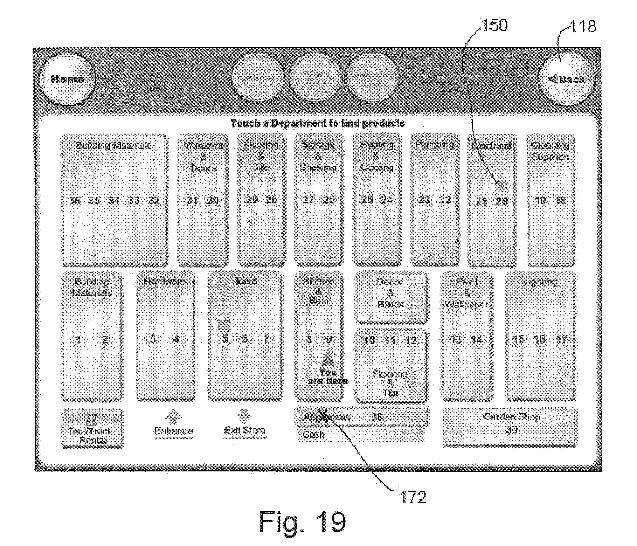

To generate the display in Figure 19, the user selects "Store Map" button 114 in Figure 18. The map in the present figures shows the following: the user's location, the location of the Product X (marked with X 172), the items added to the shopping list (marked on the map with shopping cart icon 150). The color of X 172 can indicate that the product marked was viewing but not yet added it to the Shopping List.

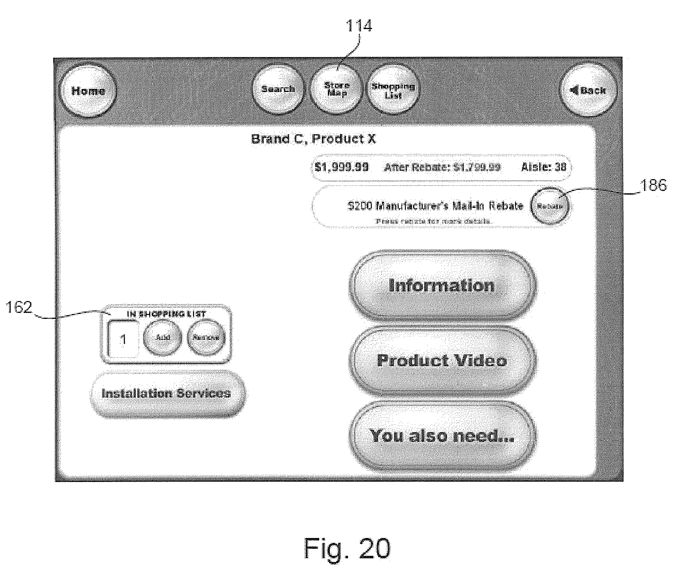

To generate the display in Figure 20, the user selects "Back" button 118 in Figure 19. The number 1 appears in the bar 162. "Add to Shopping List" text changes to read "In Shopping List" in bar 162.

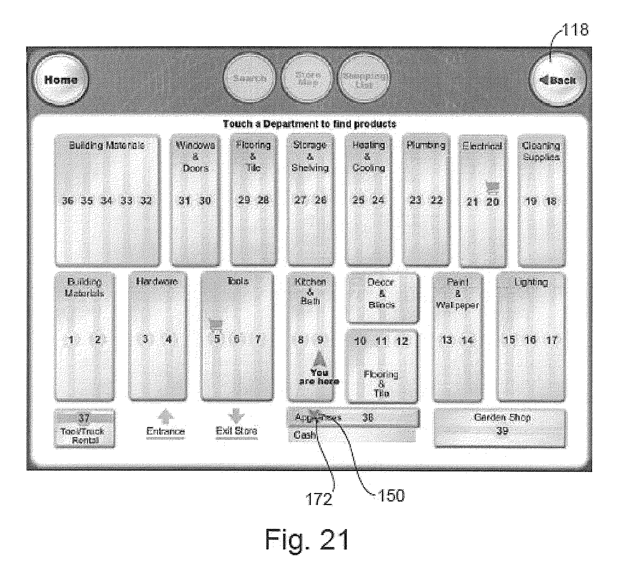

To generate the display in Figure 21, the user selects "Store Map" button 114 in Figure 20. Shopping cart icon 150 has been added overtop of X 172, indicating that Product X has been added to the Shopping List.

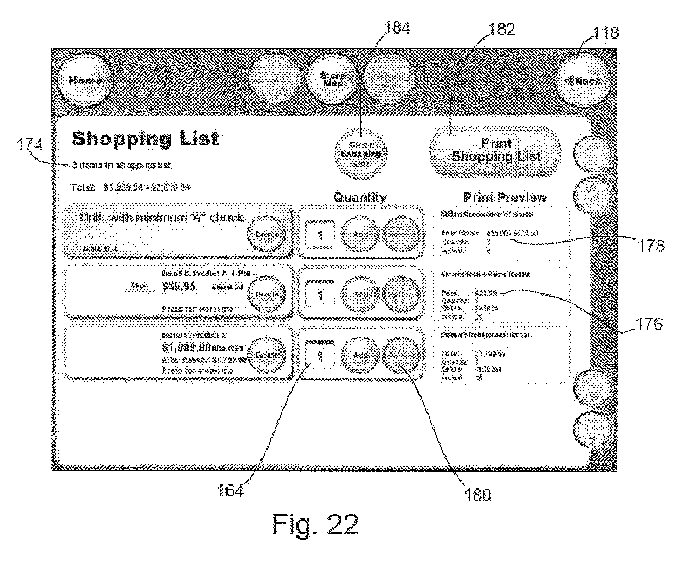

To generate the display in Figure 22, the user selects "Back" button 118 in Figure 21. This display shows: how many items have been added to the list, "3 items in shopping list" 174); and an exact total 176 or a total range of the cost 178, depending on whether or not specific products or generic items are selected. Range 178 is shown since the user did not pick a specific drill but rather added the tool description to the shopping list. In this screen the user can adjust the quantity 164 to add/remove items. Also, the user can delete products from this list with "Remove" button 180 or print the shopping list using button 182. A printed shopping list contains some or all of the following the name or description of the product, the price, quantity, SKU number, and aisle number. After printing, a shopping list is automatically deleted. A user also can use "Clear" button 184 to clear the entire shopping list.

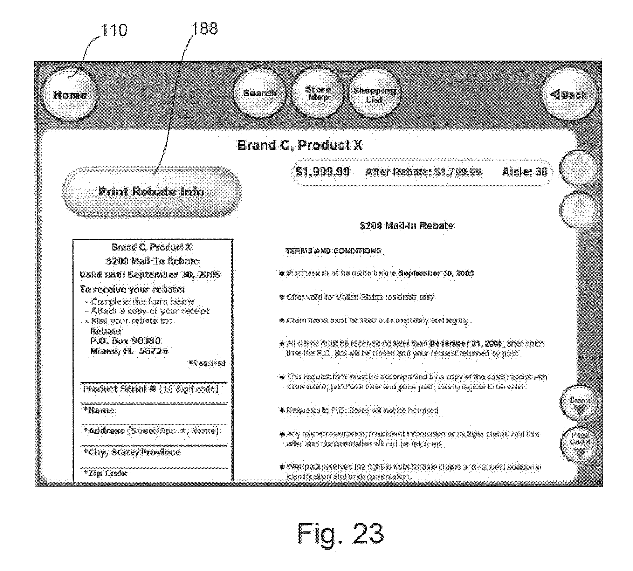

To generate the display in Figure 23, the user selects "Back" button 118 in Figure 22, returns to Figure 20 and then selects "Rebate" button 186 in Figure 20. The user can review the terms and conditions for rebates in this display and print a rebate form using button 188.

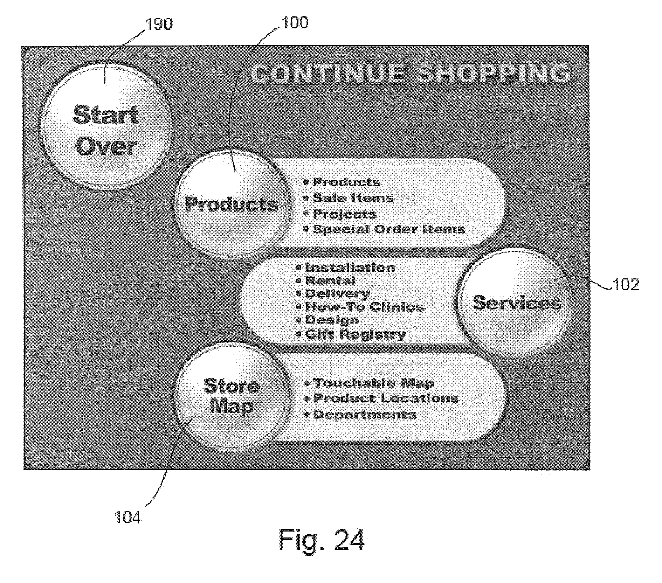

To generate the display in Figure 24, the user selects "Home" button 110 in Figure 23. At any point in the displays, the user can select "Home" button 110 to return to the Home page (Figure 3). The user can continue on with their session by selecting "Products" 100, "Services" 102, or "Store Map" 104 buttons or choose to delete all their history stored in the application (i.e. items added to the store map and shopping list) by selecting "Start Over" button 190.

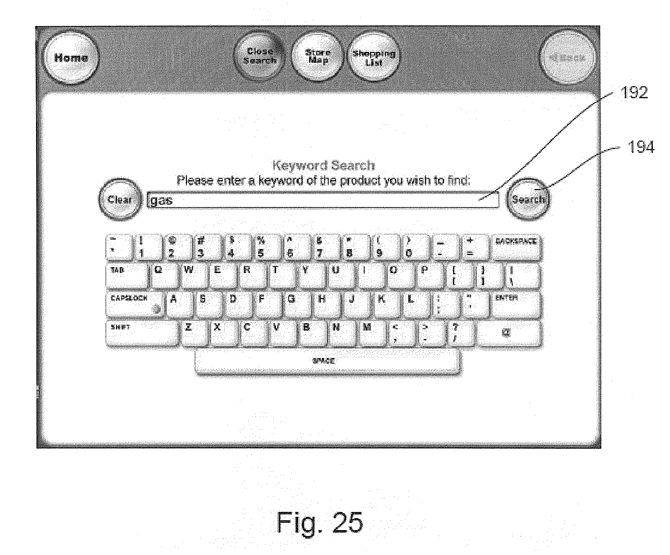

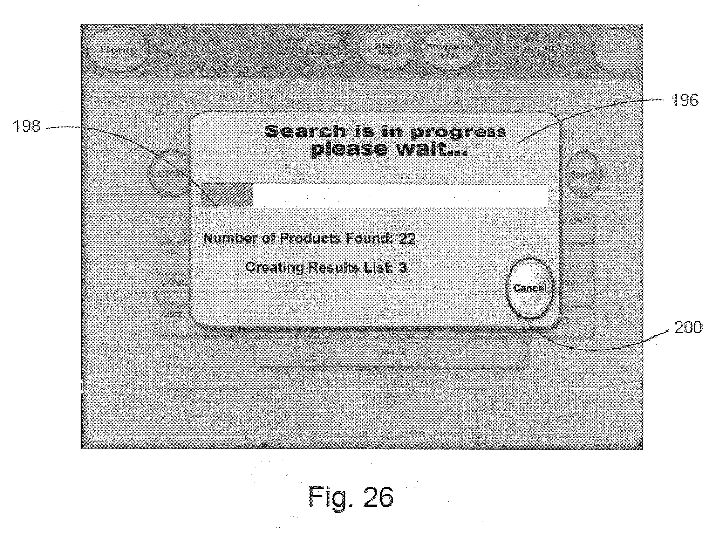

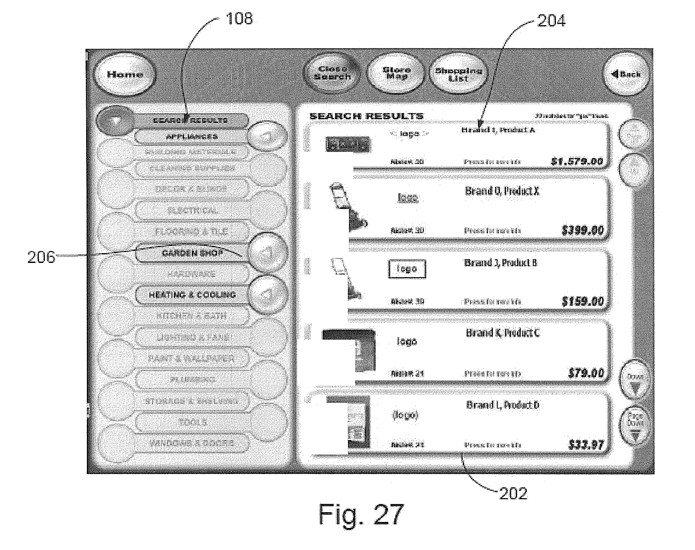

Figures 25 through 28 show the use of a keyword product search. To generate the display in Figure 25, the user selects "Search" button 112 in Figure 5. To select a product with "gas" in its description, the user types "gas" in field 192. To generate the display in Figure 26, the user selects button 194. Search progress tab 196 shows the number of products found and gives an idea of how long the search will take to finish based on the amount of space left to be filled in bar 198. During a search, the only active button is "Cancel" button 200. Figure 27 shows a completed search. Departments 108 containing products with the word "gas" in their title and/or description, found behind "Information" button 202, are highlighted. The user can select a department to further narrow a search or can select a product from the list of products found in Search Results 204.

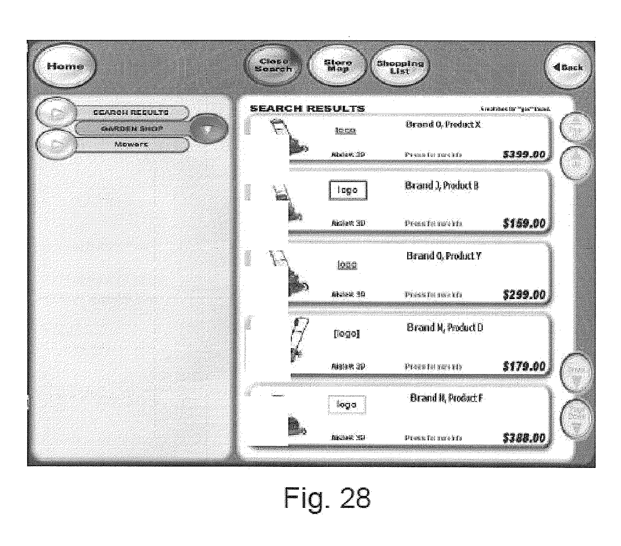

To generate the display in Figure 28, the user selects button 206 in Figure 27. From the display in this figure, the user can perform the same functions that were described beginning with Figure 7. The user can return to the display in Figure 5 by selecting button 208 in Figure 28.

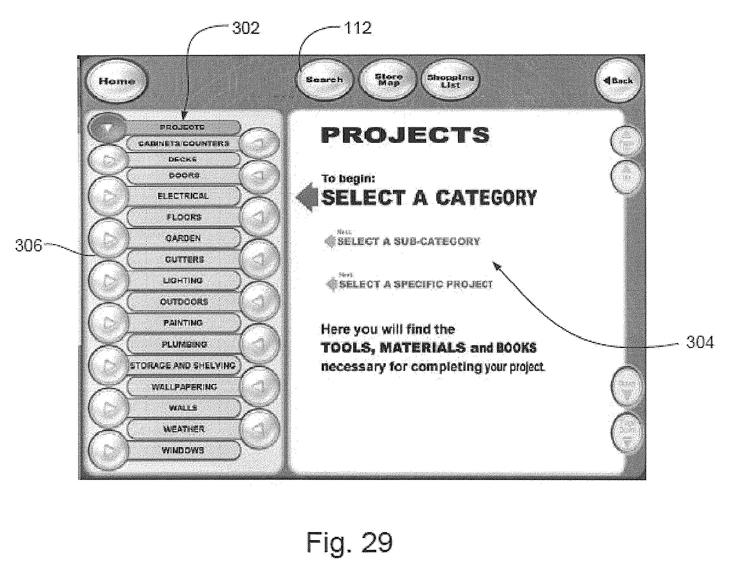

Figures 29 through 36 are pictures of screens in a user interface of the present invention, showing a sequence of customer interactions regarding projects supported by a retail entity. The following should be viewed in light of Figures 1 through 36.

To generate the display in Figure 29, the user selects "Projects" button 300 in Figure 4. List 302 of projects in system 10 appears to the left of the display and instructions 304 appear in the middle of the display.

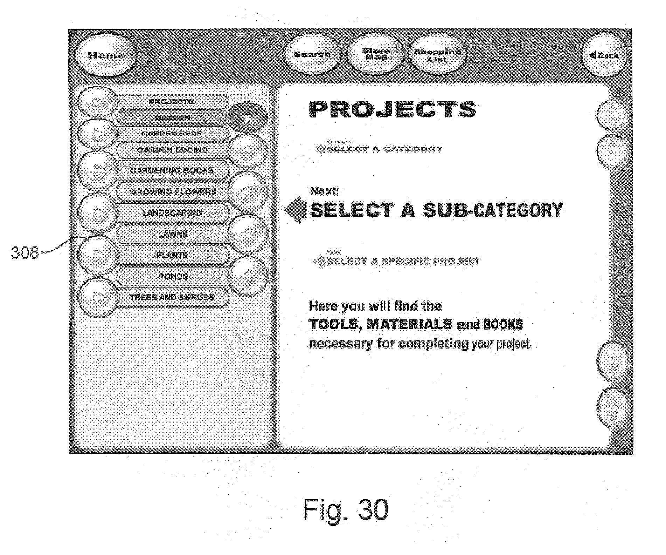

To generate the display in Figure 30, the user selects "Garden" button 306 in Figure 29. If a user is uncertain as to how to classify a project, the user can select button 112 and perform a search, similar to the process started with Figure 25. The general function of the display in this figure, for example, the function and display of the buttons in 302, is similar to that described for Figure 6.

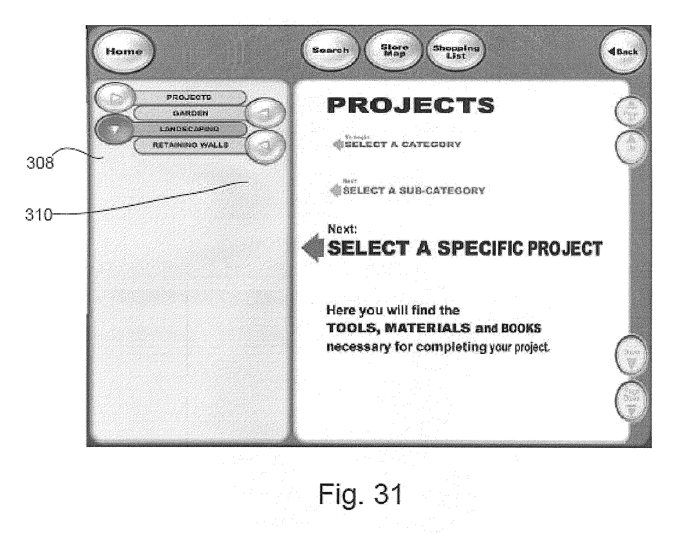

To generate the display in Figure 31, the user selects "Landscaping" button 308 in Figure 30. Further categories under "Landscaping," in this case, "Retaining Walls" 310 are shown under "Landscaping" button 308.

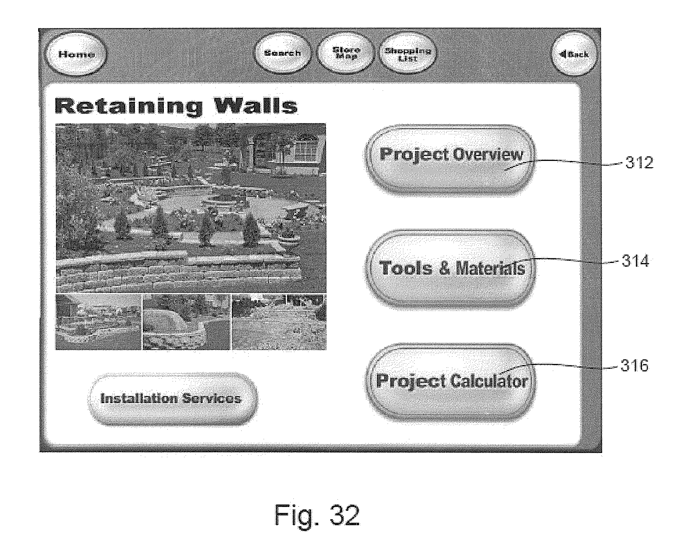

To generate the display in Figure 32, the user selects "Retaining Walls" button 310 in Figure 31. This figure shows three main buttons: "Project Overview" 312, "Tools & Materials" 314, and "Project Calculator 316."

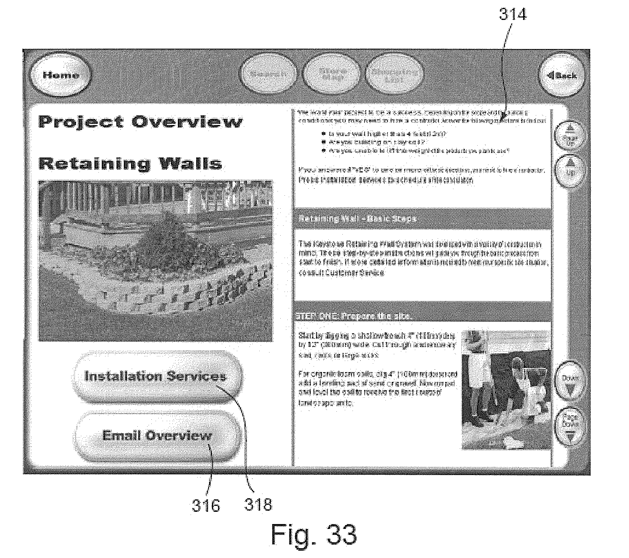

To generate the display in Figure 33, the user selects "Project Overview" button 312 in Figure 32. An overview 314 of the steps involved in completing the selected project appears on the right of the display. The user selects the "Email Overview" button 316 to email a copy of the overview. The user selects "Installation Services" button 318 to learn more about installation services offered with respect to the selected project.

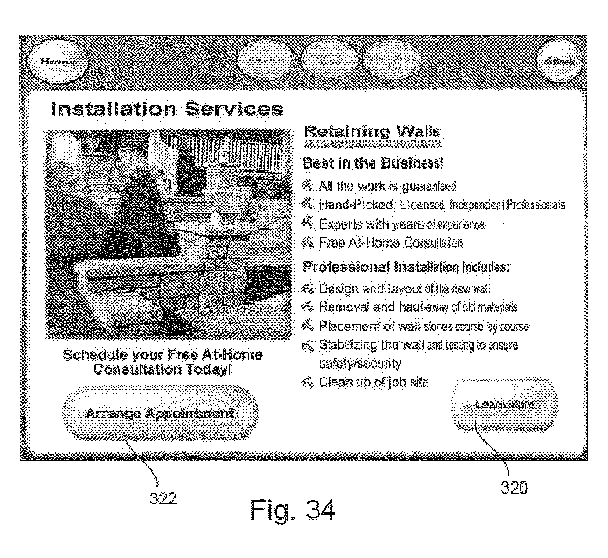

To generate the display in Figure 34, the user selects "Installation Services" button 318 in Figure 33. The user selects "Learn More" button 320 to obtain further information regarding the selected project. The user selects "Arrange Appointment" button 322 to schedule an appointment. After selecting button 322, the user is presented with a series of screens (not shown) through which the user inputs contact information. System 10 passes the contact information to the appropriate parties, for example, contractors.

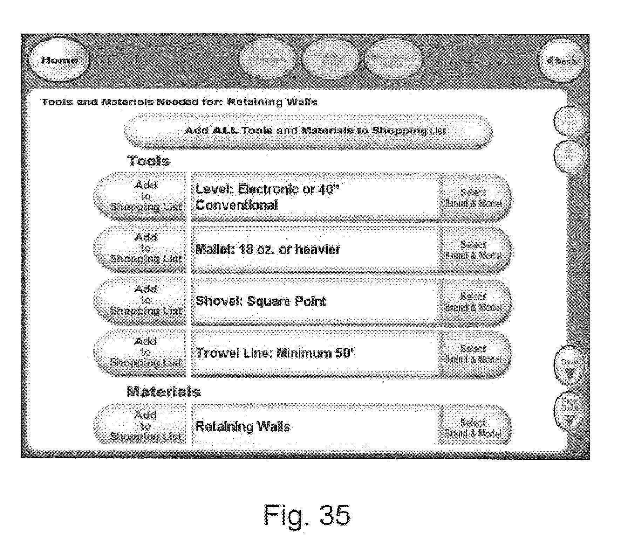

To generate the display in Figure 35, the user selects "Tools and Materials" button 314 in Figure 32. This display is configured similar to the display shown in Figure 11 and the descriptions for Figure 11 and succeeding figures are applicable to Figure 35.

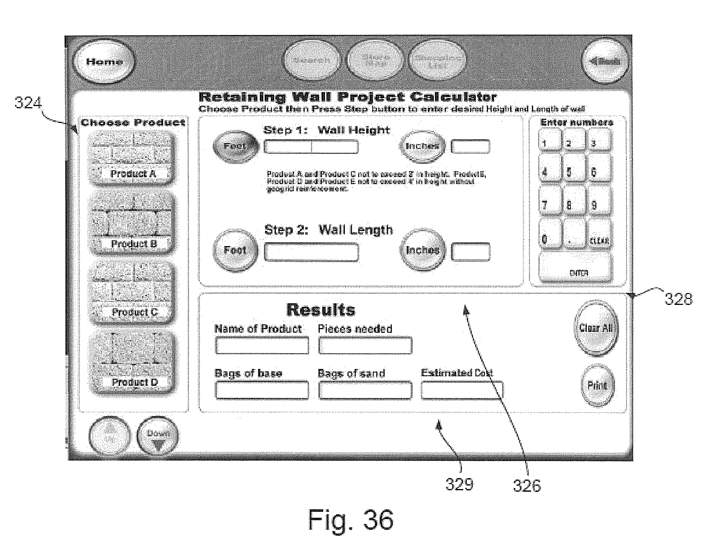

To generate the display in Figure 36, the user selects "Project Calculator" button 316 in Figure 32. In this display, the user can select a type of stone for the retaining wall (the selected project) in box 324 and enter dimensions for the wall in text box 326 (using pad 328). In accordance with the selected stone type and the dimensions entered, the project calculator in system 10 automatically calculates the number of: pieces of stone, bags of base, bags of sand; and an estimated cost and displays this information in text box 329. The user can change the type of stone and/or dimensions and quickly obtain modified materials and cost estimates. The user also can change only the type of stone without the necessity of re-entering dimensions. The project calculator is not limited to any number or type of projects. For example, the project calculator can address projects involving: ceramic tile, air conditioning, carpet, drywall, paint, insulation, wallpaper, and seeding. It should be understood that the preceding are examples only and the project manager is not limited to these examples only.

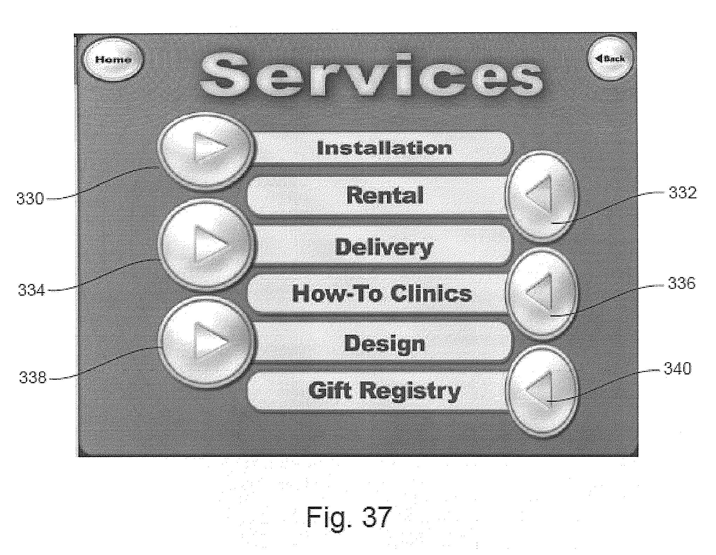

Figures 37 through 39 are pictures of a screen in a user interface of the present invention, showing a sequence of customer interactions regarding services offered by a retail entity. The following should be viewed in light of Figures 1 through 39.

To generate the display in Figure 37, the user selects "Services" button 102 in Figure 3.

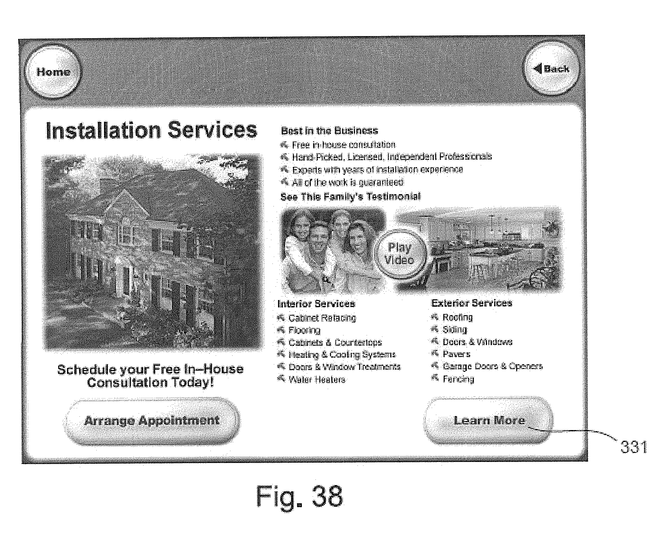

To generate the display in Figure 38, the user selects "Installation" button 330 in Figure 37. This display outlines the services available to the customer through the retail entity. "Learn More" button 331 is used to display more about specific information regarding installation services.

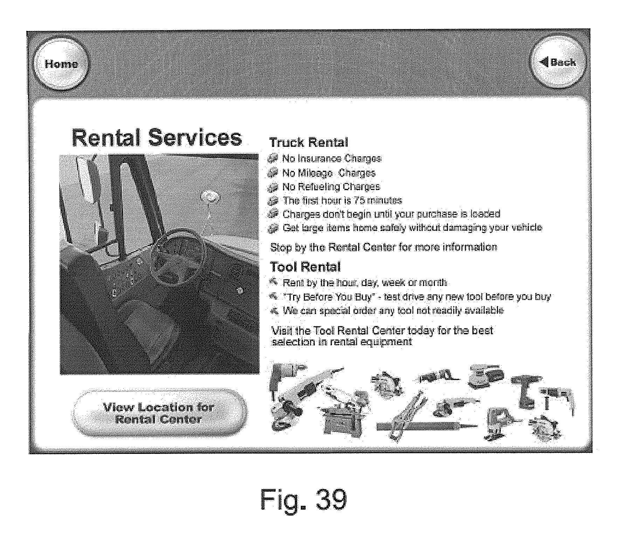

To generate the display in Figure 39, the user selects "Rental" button 332 in Figure 37. In like manner, information regarding the following services: delivery, how-to clinics, design, and gift registry is displayed by selecting buttons 334, 336, 338, and 340, respectively.

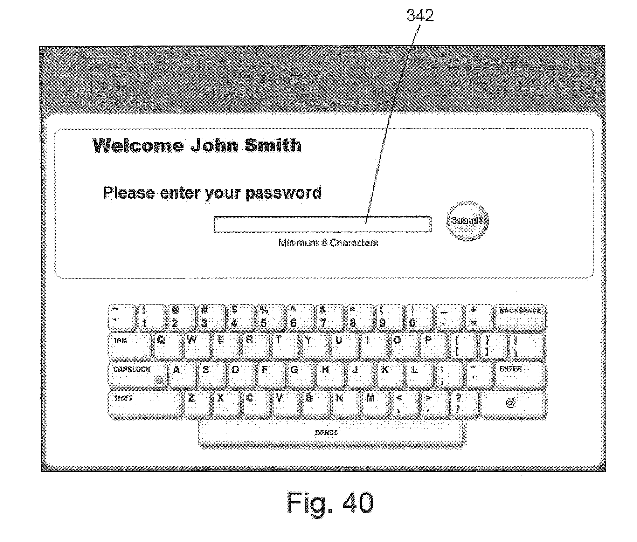

Figures 40 through 44 are pictures of screens in a user interface of the present invention, showing a sequence of interactions with an employee of a retail entity. In general, employee level interactions with system 10 are not available to customers of the retail entity. Therefore, a variety of methods are used to limit access to the employee level. It should be understood that any means known in the art can be used to regulate access to employee levels in system 10. For example, smart cards can enable employee to access different and/or more sensitive levels of access inappropriate for customers. Smart cards also can be used by employees to quickly and easily activate custom configurations specific to particular employees. In Figure 40, an employee could use a smart card to generate the display shown. The following should be viewed in light of Figures 1 through 44.

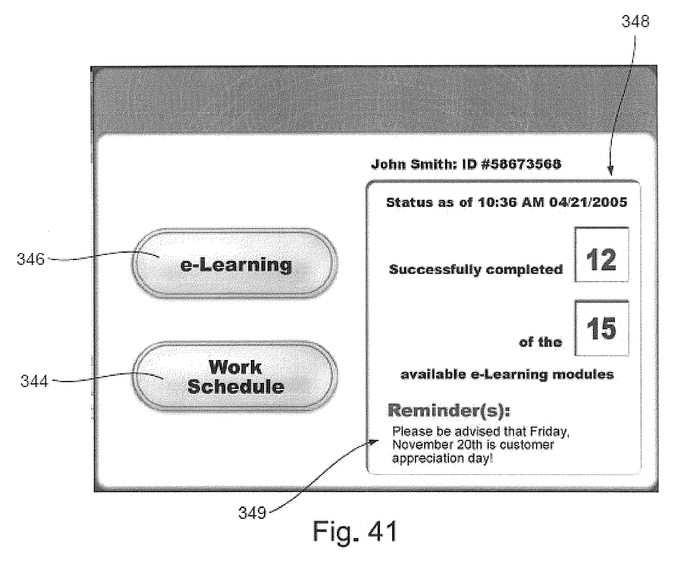

To generate the display in Figure 41, the employee enters a password in text box 342. Here, the associate can choose between viewing their work schedule and entering into e-Learning training by selecting buttons 344 or 346, respectively. Various information, such as a log of the number of training modules completed, is displayed in box 348. There is a "Reminder" section 349 in box 348 that can be used by manager/supervisor or others to post reminders to an individual employee, a group of employees, or all employees.

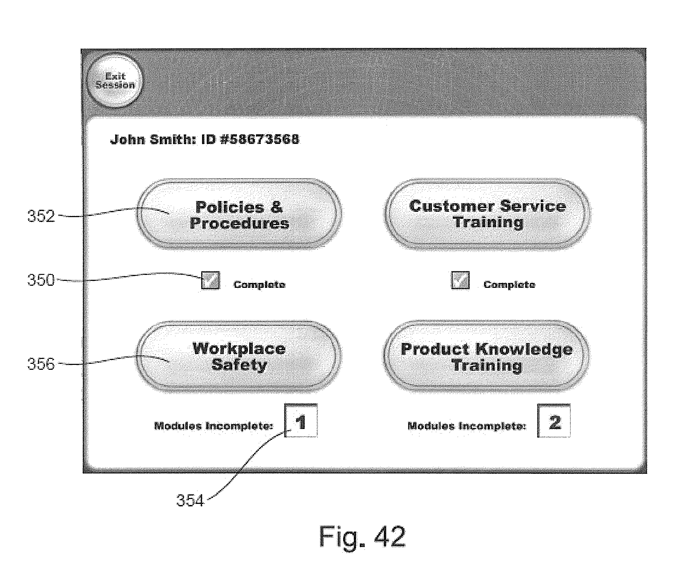

To generate the display in Figure 42, the employee selects "e-Learning" button 346 in Figure 41. Respective boxes 350 show that all the modules for a particular training subject 352 have been completed by the employee. Respective boxes 354 show the modules that have not been completed by the employee for a particular subject 352.

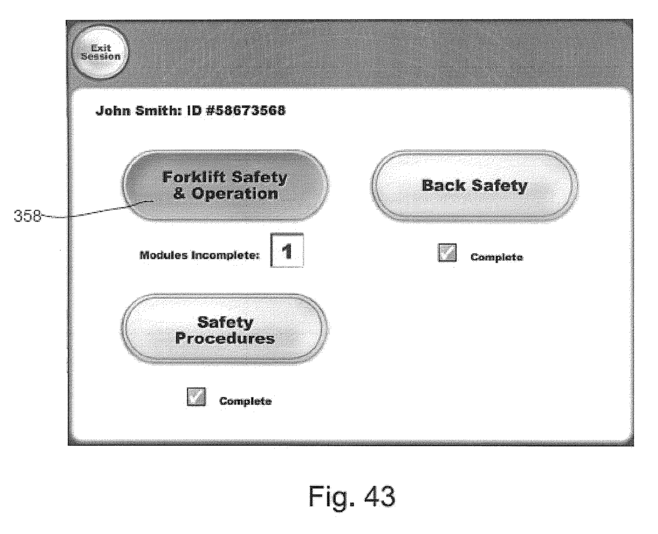

To generate the display in Figure 43, the employee selects "Workplace Safety" button 356 in Figure 42. The display in Figure 43 shows that the employee needs to complete module 1 of "Forklift Safety & Entity."

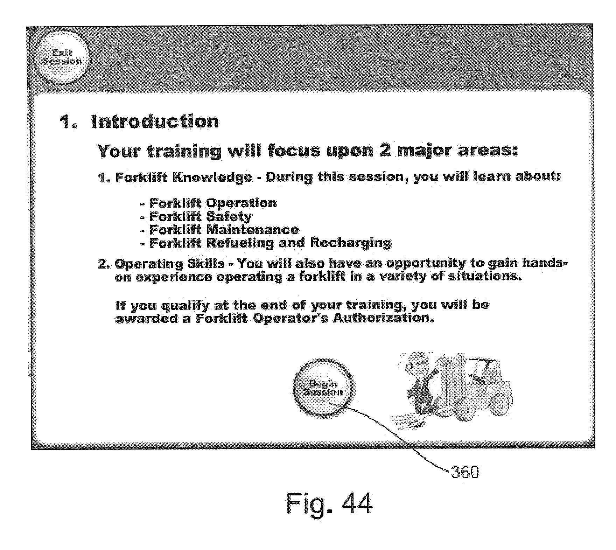

To generate the display in Figure 44, the employee selects "Forklift Safety & Entity" button 358 in Figure 43. The display in Figure 44 shows an introduction to the training module. The employee selects "Begin Session" button 360 to begin work on the subject module. A series of screens (not shown) are then displayed providing training information and examples.

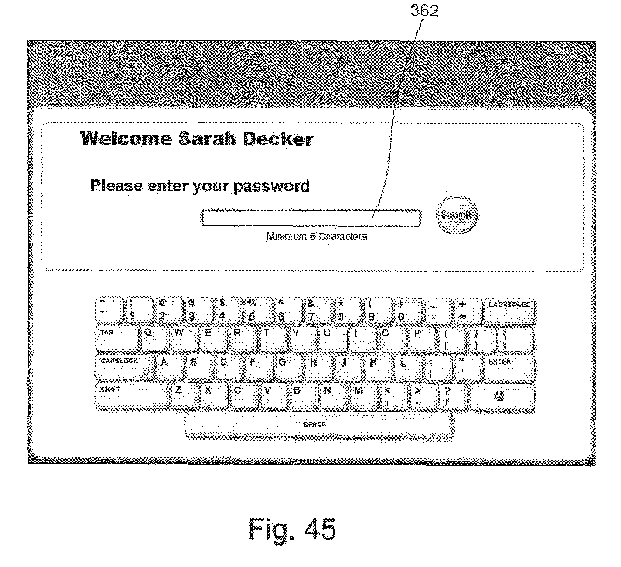

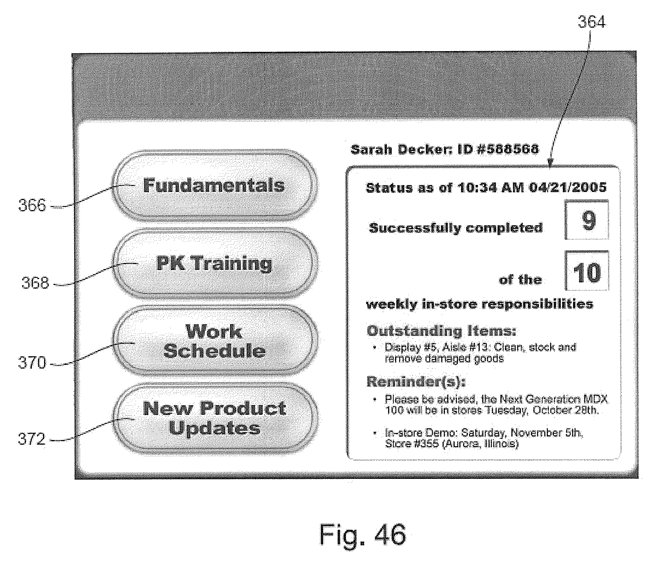

Figures 45 and 46 are pictures of a screen in a user interface of the present invention, showing a sequence of interactions with a vendor representative. As described for the employee level interactions, vendor representative level interactions with system 10 are typically not available to customers of the retail entity. Therefore, a variety of methods are used to limit access to the vendor representative level. It should be understood that any means known in the art can be used to regulate access to vendor representative levels in system 10. For example, smart cards can enable vendor representative to access different and/or more sensitive levels of access inappropriate for customers. Smart cards also can be used by vendor representatives to quickly and easily activate custom configurations. The following should be viewed in light of Figures 1 through 46

To generate the display in Figure 45, a vendor representative could use a smart card.

To generate the display in Figure 46, the vendor representative enters a password in text box 362. The Vendor Representative Application in system 10 enables a vendor representative to make better use of their time, stay more organized and better service the stores for which he/she is responsible. In box 364, a log of the number of tasks completed is kept. There are "Reminder(s)" and "Outstanding Items" sections, which can be used by the vendor representative's manager/supervisor and/or retail entity personnel to post information, messages, and reminder(s) for the representative. The following functions (not shown in further detail) are available through the display in Figure 46. By selecting "Fundamentals" button 366, the representative finds information that relates to their daily functions and responsibilities, for example, which displays to clean or product inventory that need stocking in the retail facility. By selecting "PK Training" button 368, the representative finds information related to training activities for retail associates, to be performed by the representative. By selecting "Work Schedule" button 370, the representative finds their schedule of stores to visit/service. By selecting "New Product Updates" button 372, the representative finds information from the vendor manager/supervisor advising them of new products being introduced by their company. The information for the vendor can be obtained through data streams 18, 26, 46, and 64. Also, elements 36 and 40 can "automatically" generate messages for rep 54, for example, based on inventory levels.

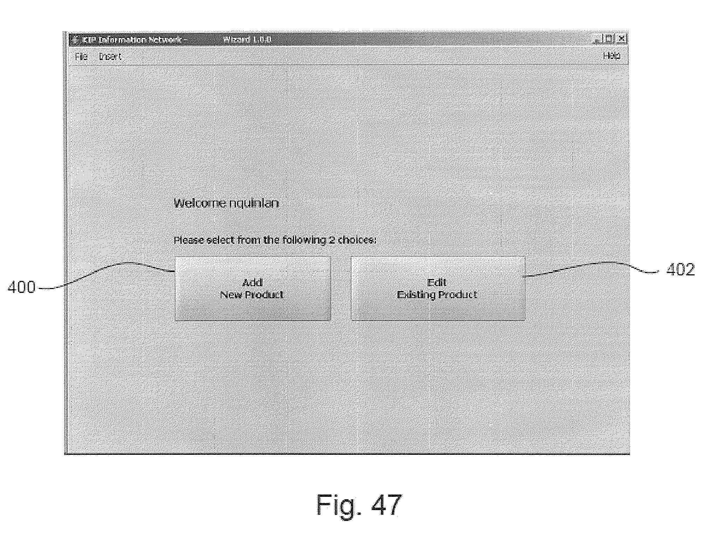

Figures 47 through 68 are pictures of screens for vendor control element 23 of the present invention. In general, access to vendor control element 23 is restricted and a user must have a user name and password. After successfully logging in, a user sees the screen in Figure 47. The user can select button 400 to add a new product to system 10 or can select button 402 to edit information regarding a product already entered in system 10.

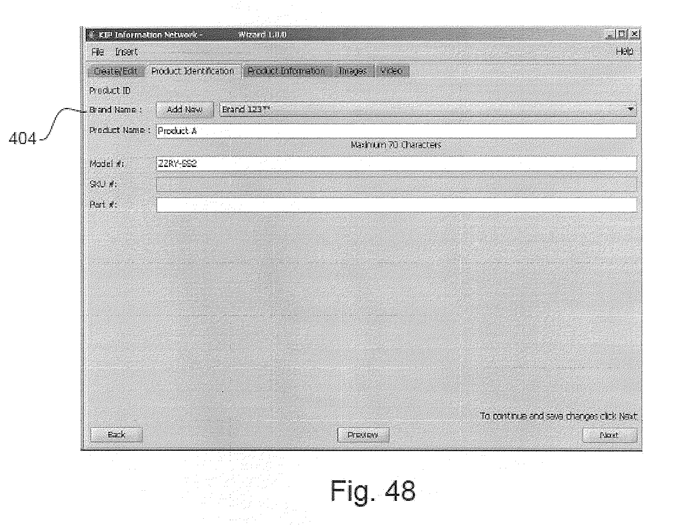

To generate Figure 48, the user selected button 400 in Figure 47. The display in Figure 48 prompts the user for various categories of information regarding the new product, for example, "Brand Name" text box 404.

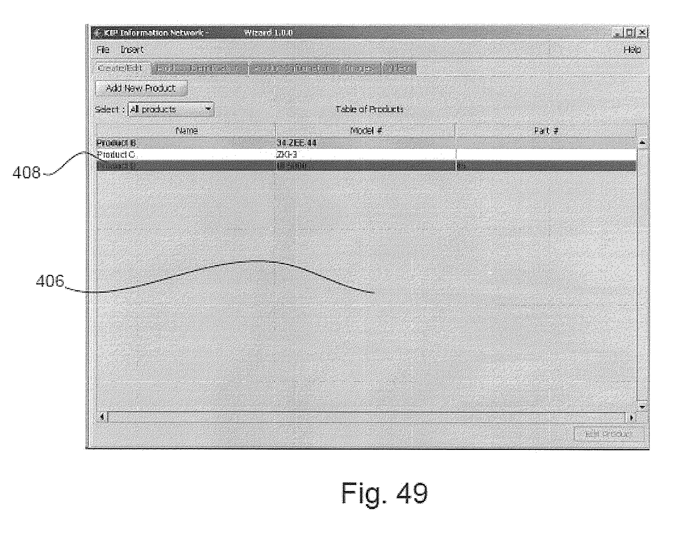

To generate Figure 49, the user selected button 402 in Figure 47. In this display, the user is presented with a listing of applicable products in text box 406. When the user selects a product to edit, system 10 generates a display similar to the display in Figure 48, except that the various fields are already populated with information previously submitted for the existing product.

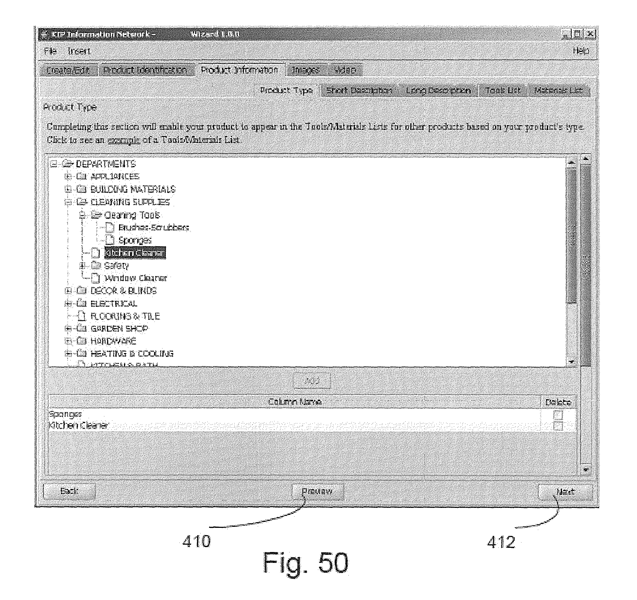

To generate Figure 50, the user selected field 408 in Figure 49. The display in this figure prompts the user to classify the product and where the product should appear in a hierarchy of categories and departments. It is possible to locate a product in multiple positions in the hierarchy. In general, selections made using element 23 are subject to approval of the retailer.
Selecting button 410 brings up a preview sequence to show how the subject product will look on the user interface.

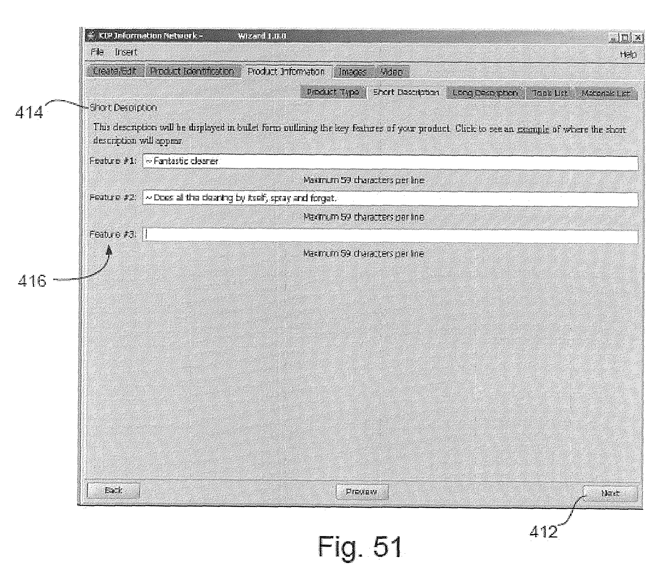

To generate Figure 51, the user selected button 412 in Figure 50. The user can enter descriptive information, Short Description 414 regarding the subject product in fields 416.

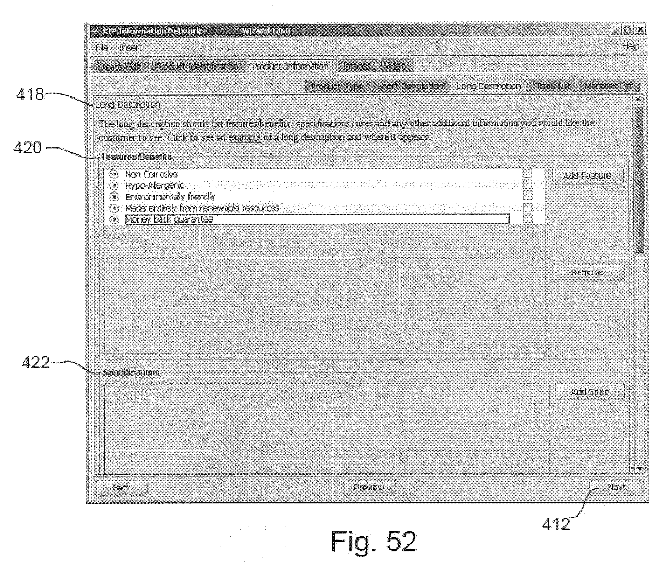

To generate Figure 52, the user selected button 412 in Figure 51. The user is prompted for additional information, Long Description 418 that is then listed in point form. In some aspects, Features/Benefits 420, Specifications 422, and Recommended Uses and Warranty Information (not shown) are the sections in this display.

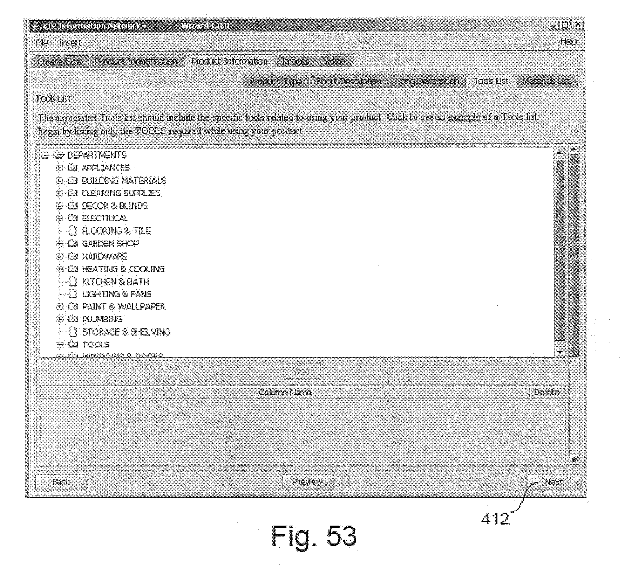

To generate Figure 53, the user selected button 412 in Figure 52. This display prompts the user to select the tools associated with the subject product. For example, the user can select tools required to assemble, install or use the subject product. This is the mechanism for vendor/supplier to provide the information used in the sequence of displays beginning with Figure 11 above.

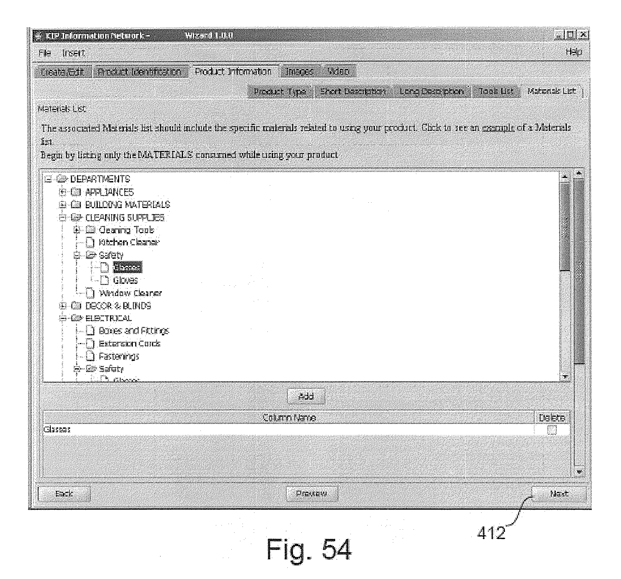

To generate Figure 54, the user selected button 412 in Figure 53. This display prompts the user to select the materials associated with the subject product. For example, the user can select materials required to assemble, install or use the subject product. This also is part of the mechanism for vendor/supplier to provide the information used in the sequence of displays beginning with Figure 11 above.

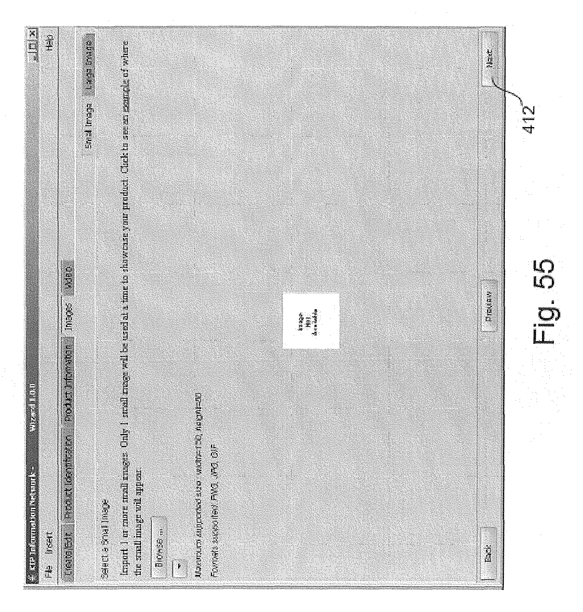

To generate Figure 55, the user selected button 412 in Figure 54. This display prompts the user to import and or select a small image to represent the subject product. This small image is used when the product is shown in a list with other products.

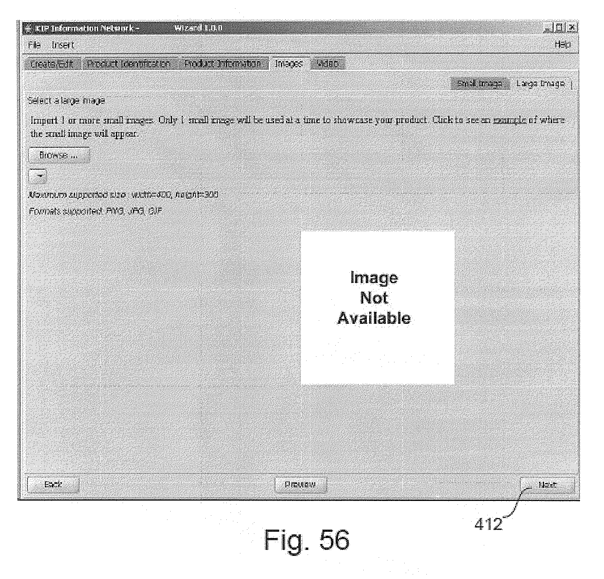

To generate Figure 56, the user selected button 412 in Figure 55. This display prompts the user to import and or select a large image to represent the product. The large image is used when product is viewed by itself.

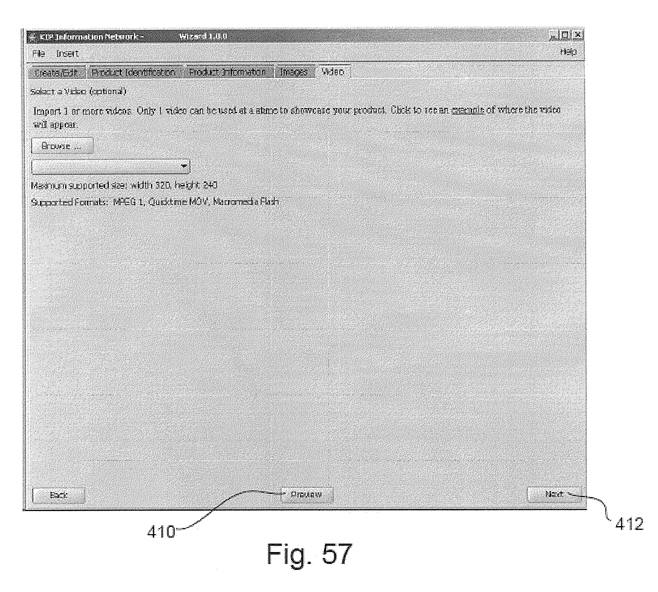

To generate Figure 57, the user selected button 412 in Figure 56. This display prompts the user to import and or select a video to represent the product. The video is only used when product is viewed by itself and a customer elects to view it.

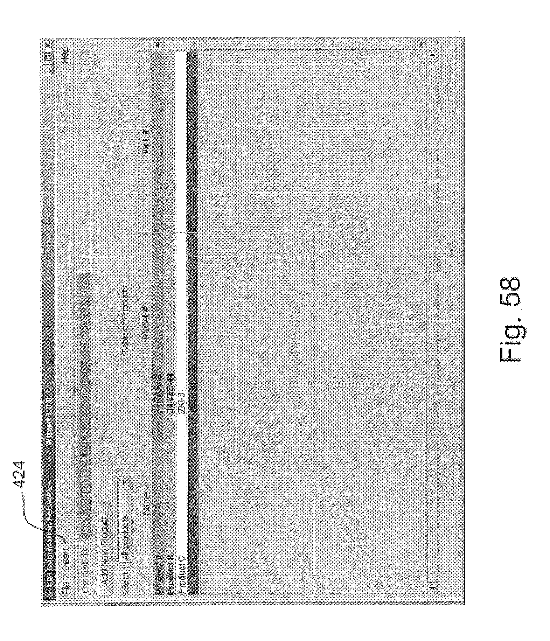

To generate Figure 58, the user selected button 412 in Figure 57. By default, this display lists all available products. User can filter what products are displayed so that user can more easily deal with products requiring immediate attention. User can add new products or edit existing products without returning to the displays in Figures 48 and 49, respectively. The display can be color coded. For example, a first colors shows a product that has been newly added. A second color shows a product that has been modified but previous version is on kiosk. A third color shows a product that has been approved for display on the user interface. A fourth color shows a product that has been added or modified. This information is sent to the central application for approval by the retailer. A fifth color shows a product that was previously displayed on the user interface, but currently restricted for such display due to a problem.

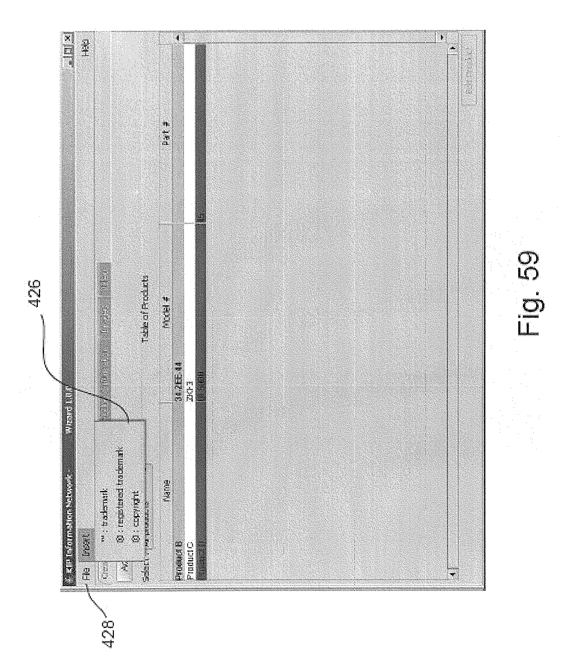

To generate Figure 59, the user selected "Insert" 424 in Figure 58. Pulldown menu 426 shows frequently used symbols that may be difficult to enter using a standard keyboard.

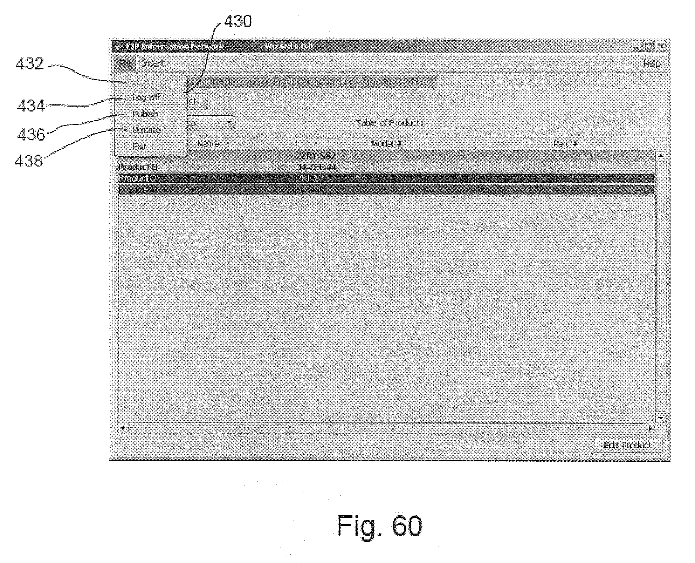

To generate Figure 60, the user selected "File" 428 in Figure 59. Pulldown menu 430 includes "Login" 432 (grayed out when already logged in), "Log-Off" 434 (logs user off so a login is required to resume editing), "Publish" 436 (transmits selected products (New or Modified) to the central application for approval), and "Update" 438 (displays an update of all approved products or changes from the central application).

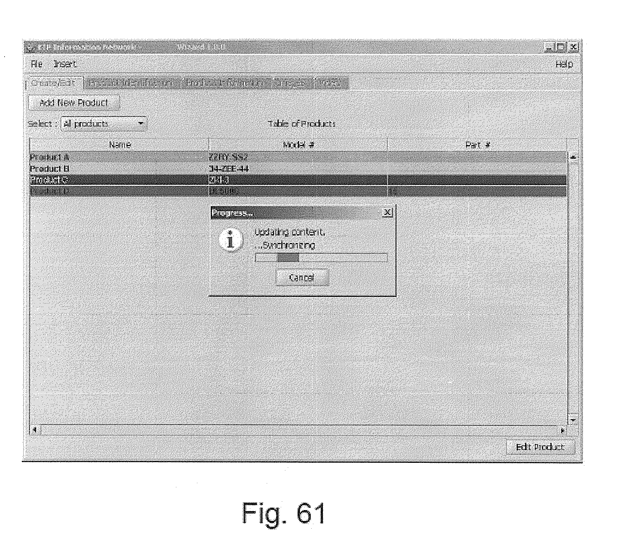

To generate Figure 61, the user selected "Update" 438 in Figure 60. Element 23 accesses the central application to download new department and category information as well as products that have been approved or rejected.

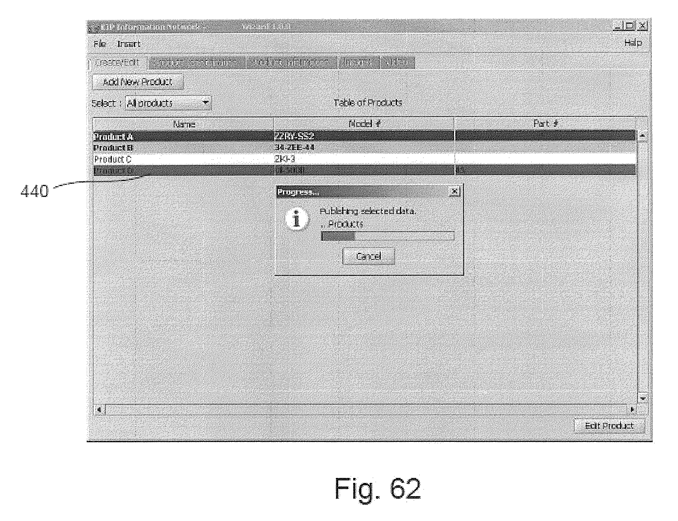

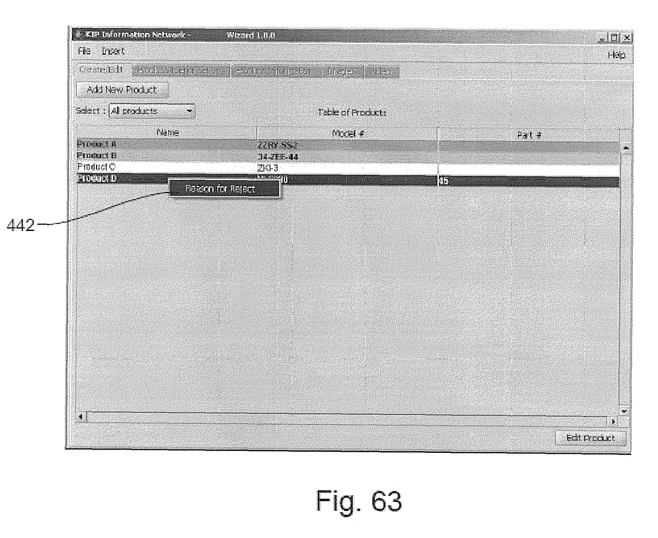

To generate Figure 62, the user had earlier selected new or modified products and then selected "Publish" 436 in Figure 63. This process uploads selected product and media files to the central application for retailer approval before the product or files appear on the user interface. Products transition to a pending state once they are uploaded to indicate they cannot be modified again nor re-published until they have been reviewed by the retailer.

In Figure 62, Product D 440 is coded as restricted. To generate the display in Figure 63, the user clicked on Product D. Menu 442 list options regarding a rejected product.

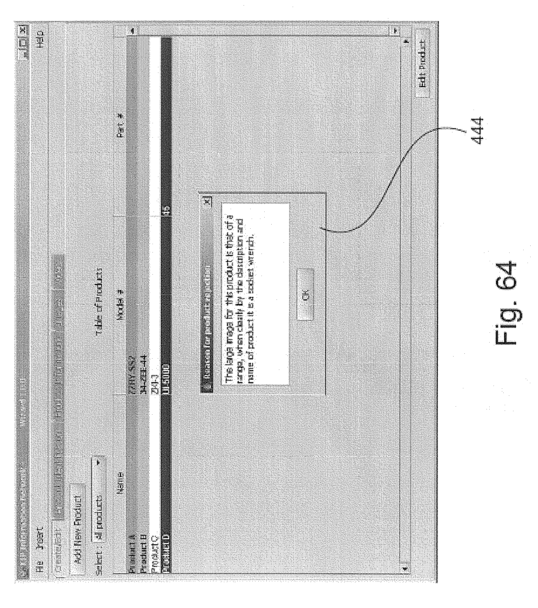

To generate Figure 64, the user clicks on menu 442 in Figure 63. Text box 444 shows the reason a product was rejected by the retailer. The text box clearly explains why the product was rejected and suggests modifications necessary for the retailer to approve display of the product on the user interface.

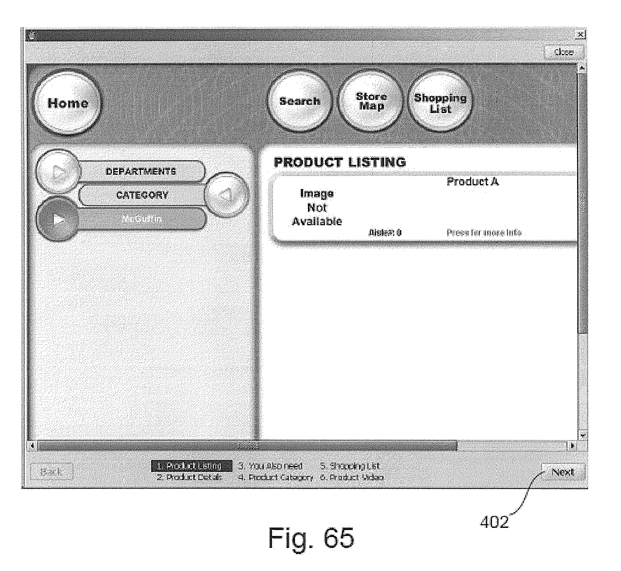

To generate Figure 65, the user clicks on button 410 in Figure 57. Figures 65 to 68 illustrate the preview mechanism which provides vendor 20 the ability to see exactly how their product will appear on UI 16. The following sequence is for Product A, added starting with Figure 47. This display shows Product A in the context of a product listing and also shows how the product appears when a user selects a category on UI 16 that contains the product.

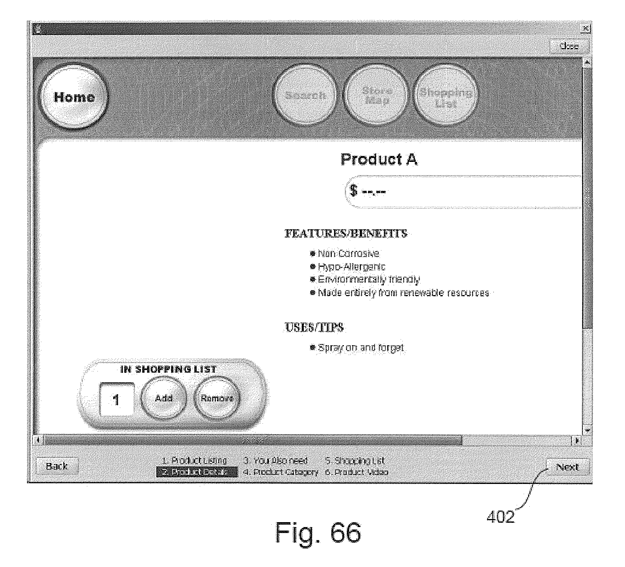

To generate Figure 66, the user selected button 402 in Figure 65. This display shows how the product details that appear on the user interface. Entries from

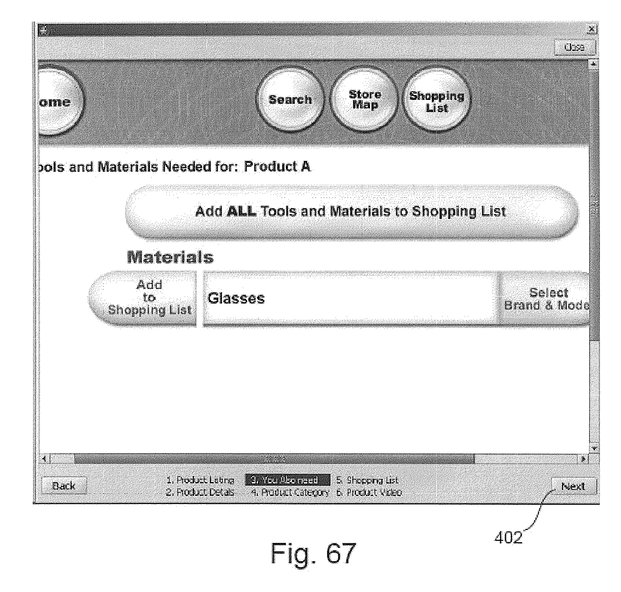

To generate Figure 67, the user selected button 402 in Figure 66. This display shows the tools and materials associated with Product A. In some aspects (not shown), a tree or hierarchy of departments in a location associated with a user interface is shown and the subject product is placed within the tree.

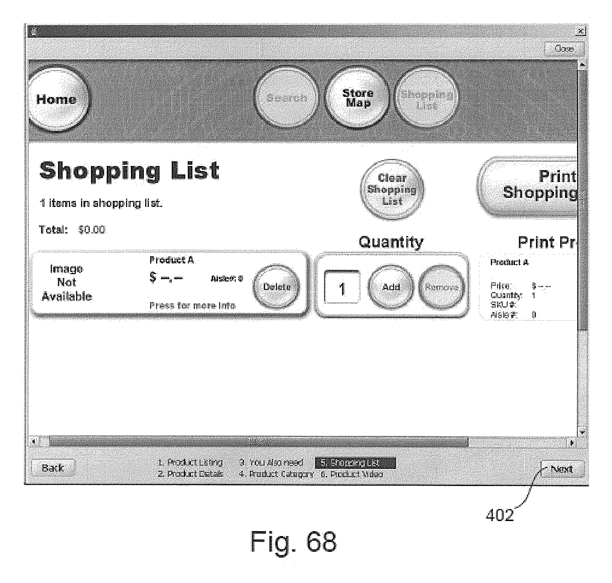

To generate Figure 68, the user selected button 402 in Figure 67. This display shows a shopping list screen for the subject product. If a video is added in Figure 57, the vendor selects button 402 to display the video (not shown).

Regarding Figures 2-68, it should be understood that images of the products, manufacturer's logos, or other items can be displayed (not shown). For example, Figures 7-9 show blank boxes labeled "image" or "logo." In some aspects, the respective images noted above are placed in these blank boxes. On other of the figures, the same types of areas occupied by the boxes in Figures 7-9 are left blank. However, it should be understood that images also can be displayed in those blank spaces. It should be further understood that images can be placed in other parts of Figures 2-68.

System 10 provides cost-effective solutions to many problems, some of which were enumerated *supra,* faced by managers, employees, vendors, and retail customers associated with a retail entity. For example, through the use of UI 16 customer 48 can perform the following tasks: obtain product information such as: image of the product, price, features, benefits, uses for the product and customer qualifications, video (multimedia), warranty specifications, installation instructions, and related do-it-yourself projects, and tips; compare products: customer 48 can compare similar products within a category, within a brand, or between brands; find related products, materials, and tools: for each product, a list of related tools, materials, products and accessories can be provided; view inventory levels: current stock levels of in-store merchandise can be displayed; view interactive store map: a map displays the floor plan with departments, the location at which the customer is standing, and each selected product location; find in-store specials: a selection from the main menu alerts the customer to in-store specials and discounts; make a shopping list: the customer can create a shopping list and print it on the spot, with prices, product locations, and reminders to pick up all necessary tools and materials; assist in project planning: detailed project planners explain to customers the steps required to accomplish a particular task, and the tools and materials that they will need to get the job done. Also, customers can email the project plan for future reference; project calculations: a project calculator is a tool included in the project planner that enables a customer to calculate the amount of materials needed for specific home improvement projects; view special order items: customers can browse through and order an endless amount of manufacturers' products that are only available through special order; receive coupons: customers can print retailer and manufacturer coupons in-store; loyalty program use: enable s wipe cards, apply for in-store credit card/loyalty card, view targeted promotions, and redeem loyalty points; and, access to gift registries such as a bridal registry, baby registry, anniversary, and special occasions.

Through the use of UI 16, retailer 24 and vendor 20 can obtain customer relationship management, which includes information on customer behavior, profile customers based on virtual ID or loyalty card, and target promotions based on customer profile.

System 10 provides a myriad of advantages over existing system for managing data in a retail environment. For the retailer, system 10 bolsters customer service, which can lead to an increase in market share for the retailer. To this end, system 10 delivers complete and critical product information to the customer necessary to drive incremental sales. For example, the system drives instant specials/promotions and sales and reminds retail customers of forgotten items forgotten or items the customer did know they needed to properly use or install a selected product. System 10 also enables new revenue flow by up-selling customers to higher quality items, cross selling and cross promotion with other vendors, increasing exposure through add-on lists from other products or projects, increasing exposure of store services, increasing revenue through capture of lost sales, and realizing revenue resulting from reduced staff training costs.

System 10 increases the efficiency and productivity of retail sales associates in an integrated and cost-effective manner. For example, system 10: enables sales associates to remain on the selling floor while conducting their training, thus reducing shrinkage and increasing associate/customer interaction; enables sales associates to focus time and attention on providing answers to difficult or unusual questions, which questions tend to result in greater customer satisfaction and otherwise unrealized sales, rather than trivial inquiries such as the location of particular items in a retail facility; supplements the associate's knowledge base, particularly if the associate has not been fully trained in a specific area of product knowledge, or has unanswered questions after training; and, provides a powerful and useful visual aid for use by the sales associate in interactions with customers.

Regarding staff training, system 10: provides an immediately accessible means of supporting the knowledge bas for retail staff; reduces need to extensively train store personnel on product information, since detailed information is readily available through UI 16; tracks staff training on product knowledge and store policies, in order to properly coordinate and focus training; and reduces negative effect of staff turnover, by providing efficient training for new staff and readily accessible product information and support.

System 10 provides a myriad of benefits to the retail customer, which in turn, increases customer satisfaction and sales. For example, system 10: provides complete and accurate information on every product in the store; informs the customer of necessary tools and materials that are associated with each product or project about which the customer is seeking information; eliminates the time spent looking for an associate or waiting for assistance; explains the steps, tools, and ancillary materials necessary to complete a project; calculates the amount of materials needed for specific home improvement projects; shows the customer location and product locations using the store map; enables the customer to email project instructions, clinic schedules, and additional store service information; enables the customer to compile and print a shopping list; lists in-store specials and discounts; advises and enables the customer to access additional services including: installation, delivery, rental, educational clinics, and design; provides information about and ability to order manufacturers' products that are only available through special order; prints retailer and manufacturer coupons; increases customer confidence regarding the completeness and accuracy of the information they are receiving, thereby reducing incidence of buyer's remorse; and, reduces customer shopping time by showing customers exactly where to find each product they are looking for and freeing sales associates to provide more technical and/or detailed information.

System 10 also provides benefits to vendors providing products or services to a retail entity. These benefits enable the vendor to be more productive and cost-effective, which translates into benefits for the retail entity and retail customer. For example, system 10 enables vendors to directly control information made available to customers, since product information provided by UI 16 comes directly from the manufacturer. Therefore, the accurate and comprehensiveness of the product descriptions provided by associates is less dependent of the knowledge or training of the associates. Further system 10: enables vendors to tailor messages on a store-by-store basis to more effectively address local demographics; reduces the cost of delivering vendor information by eliminating flyers and print advertising, elaborate box prints, or TV/VCR combinations. At the same time, system 10 reduces the amount of time and energy that sales associates must invest in delivering vendor information. Also, system 10 increases customer exposure to vendor products or services not only via a simple lookup, but also by virtue of its association with related products. Products also receive additional exposure through detailed add-on lists from other products/projects. UI 16 also presents the customer with information about the product close to the time and place of purchase, which greatly increases the probability of a sale. Further, customers give more credence and trust to product information in context than to advertising. System 10 also increases vendor flexibility in presenting their products by eliminating: restrictions due to the size of the product's box size or the size of display advertisements in newspapers or flyers; the need to find and consult product catalogs and relieves the customer and the Associate of the necessity to open product boxes to obtain additional information. Customers are often resistant to purchasing products that have already been opened.

Traditional means of information delivery are very slow in comparison to system 10 and UI 16. Therefore, system 10 expedites the dissemination of vendor information. In comparison, print media: requires substantial lead time and physical delivery and is susceptible to mistakes that cost time and money to correct. TV / VCR combinations: require extensive lead and production time; are expensive to reproduce in quantities sufficient for retailer's stores; and require the customer to watch the video in its entirety to obtain a specific piece of information, or to wait for the video to restart. Further, all information relevant to the local store is available on terminals located throughout the store, product information is available around the clock, and the customer need not consult a sales associate to obtain focused and detailed product information.

Many "big box" retailers require vendor representatives to provide extensive services regarding the stocking, inventorying, and general maintenance of products and product displays. System 10 provides a means to monitor vendor representatives, for example, by tracking the stores visited, tasks accomplished at each store, and time spent at each store.

Thus, it is seen that the objects of the invention are efficiently obtained, although changes and modifications to the invention should be readily apparent to those having ordinary skill in the art, without departing from the spirit or scope of the invention as claimed. Although the invention is described by reference to a specific preferred embodiment, it is clear that variations can be made without departing from the scope or spirit of the invention as claimed.

## Claims

1. A system for managing data in a business entity using a computer, comprising:
a central application, said central application comprising a central storage element arranged to store product data regarding a plurality of products sold by said entity and a central control element arranged to generate retail data from said product data;
a local application linked to said central application, where said local application is associated with a location of said business entity and comprises a local control element arranged to accept control data from said central control element regarding control of said system in said location and a local storage element arranged to store at least a first portion of said retail data;
a first interface linked to said local application, said interface arranged to enable modification of said local application; and,
a plurality of user interfaces located in said location and linked to said local application, where said plurality of user interfaces is operatively arranged to exchange at least a portion of said retail data, and where said central application, local application, first interface, and plurality of user interfaces are located in at least one specially programmed general-purpose computer.

2. The system recited in Claim 1 wherein said entity comprises an employee, a first vendor provides a first product from said plurality of products, and said plurality of user interfaces is operatively arranged to exchange employee information regarding an employee of said entity and vendor information regarding said first vendor.

3. The system recited in Claim 2 wherein said first vendor comprises a representative, said employee information comprises training information, and said vendor information is regarding an activity of said representative.

4. The system recited in Claim 2 wherein said local application comprises a publicly accessible level and respective security levels and said plurality of user interfaces is operatively arranged to exchange said portion of said retail data at said publicly accessible level and to exchange said employee and vendor information at said respective security levels.

5. The system recited in Claim 2 wherein said plurality of user interfaces, said local application, and said central application are operatively arranged to exchange said retail, employee, and vendor information.

6. The system recited in Claim 1 where a second vendor provides a second product from said plurality of products, a third product is associated with said second product, and a fourth product in said plurality of products corresponds to said third product; and, said system further comprising:
a vendor control element linked to said central application, where said vendor control element is arranged to accept information regarding said second and third products from said second vendor, to select said fourth product, and to correlate said second and fourth products in said retail data, where said vendor control element is located in said at least one computer.

7. The system recited in Claim 1 wherein at least one user interface in said plurality of user interfaces is stateless.

8. The system recited in Claim 1 wherein at least one user interface in said plurality of user interfaces further comprises:
an interface control element linked to said local control element and arranged to accept at least a portion of said control data from said central control element regarding control of said system in said location; and,
an interface storage element linked to said local storage element and arranged to store at least a portion of said at least first portion of said retail data.

9. The system recited in Claim 1 further comprising:
a second interface linked to said central application, said second interface arranged to enable said entity to modify said central application, where said second interface is located in said at least one computer.

10. The system recited in Claim 1 wherein said central application is linked to a supply chain database and where supply chain information regarding at least a portion of products in said plurality of products is stored in said supply chain database; and,
wherein said central application is arranged to retrieve and store said supply chain data.

11. The system recited in Claim 10 wherein said supply chain database is the Uniform Code Council UCCnet database.

12. A system for managing data in a business entity using at least one computer, comprising:
a central application, said central application comprising a central storage element arranged to store product data regarding a plurality of products sold by said entity and a central control element arranged to generate retail data from said product data; and,
a vendor control element linked to said central application, where said vendor control element is arranged to accept information from a first vendor regarding a first product from said plurality of products and a second product associated with said first product, where said vendor control element is arranged to select a third product, from said plurality of products, corresponding to said second product, and where said central application and said vendor control element are located in at least one specially programmed general-purpose computer.

13. The system recited in Claim 12 wherein said vendor control element is arranged to generate data in said retail data correlating said first and third products; and,
said system further comprising:
a local application linked to said central application, where said local application is associated with a location of said business entity and is arranged to store at least a portion of said retail data;
a first interface linked to said local application, said fist interface arranged to enable modification of said local application; and,
a plurality of user interfaces located in said location and linked to said local application, where said plurality of user interfaces is operatively arranged to display at least a portion of said data correlating said first and third products and where said local application, first interface, and plurality of user interfaces are located in said at least one general-purpose computer.

14. The system recited in Claim 13 wherein said entity comprises an employee, wherein said local application comprises a publicly accessible level arranged to facilitate exchange of said information regarding said first and third products at said plurality of user interfaces, wherein said local application comprises respective security levels arranged to facilitate, at said plurality of user interfaces, exchange of employee information regarding said employee and vendor information regarding said first vendor.

15. The system recited in Claim 12 wherein said central application is linked to a supply chain database and where supply chain information regarding at least a portion of products in said plurality of products is stored in said supply chain database; and,
wherein said central application is arranged to retrieve and store said supply chain information.

16. A method for managing data in a business entity using at least a computer, the method comprising the steps of:
storing in a central application product data regarding a plurality of products sold by said entity;
generating, in said central application, retail data regarding said product data;
linking a local application to said central application, where said local application is associated with a location of said business entity;
accepting, in said local application, control data from said central application regarding control of said system in said location;
storing, in said local application, at least a first portion of said retail data;
modifying said local application through an interface linked to said local application;
linking a plurality of user interfaces, located in said location, to said local application; and,
exchanging, using said plurality of user interfaces, at least a portion of said retail data, where said steps of storing in a central application, generating, linking a local application, accepting, storing in said local application, modifying, linking user interfaces, and exchanging are performed by at least one general-purpose computer specially programmed to perform said steps of storing in a central application, generating, linking a local application, accepting, storing in said local application, modifying, linking user interfaces, and exchanging.

17. The method recited in Claim 16 wherein said entity comprises an employee and a first vendor provides a first product from said plurality of products; and,
said method further comprises the steps of:
exchanging, using said plurality of user interfaces, employee information regarding said employee and vendor information regarding said first vendor, where said step of exchanging is performed by said general-purpose computer.

18. The method recited in Claim 17 wherein said employee information comprises training information, said first vendor comprises a representative, and said vendor information is regarding an activity of said representative.

19. The method recited in Claim 17 wherein said local application comprises a publicly accessible level and respective security levels, exchanging retail data further comprises exchanging at said publicly accessible level, and exchanging employee and vendor data further comprises exchanging at said respective security levels.

20. The method recited in Claim 17 further comprising:
exchanging said retail data, said employee data, and said vendor data among said plurality of user interfaces, said local application, and said central application, where said exchanging is performed by said at least one computer.

21. The method recited in Claim 16 further comprising the steps of:
linking an interface to said central application; and,
said entity modifying said central application using said second interface, where said steps of linking and modifying are performed by said general-purpose computer.

22. The method recited in Claim 16 further comprising:
linking said central application to a supply chain database, said supply chain database storing supply chain information regarding at least a portion of products in said plurality of products; and,
said central application retrieving and storing said supply chain data, where said steps of linking, retrieving and storing are performed by said general-purpose computer.

23. The method recited in Claim 22 wherein said supply chain database is the Uniform Code Council UCCnet database.

24. The method recited in Claim 16 where a second vendor provides a second product from said plurality of products, a third product is associated with said second product, and a fourth product from said plurality of products corresponds to said third product; and,
said method further comprising the steps of:
accepting, in said central application, information regarding said second and third products from said second vendor;
selecting said fourth product; and,
generating information regarding said second and fourth products, where said steps of accepting, selecting, and generating are performed by said general-purpose computer; and,
wherein exchanging retail data further comprises displaying said information regarding said second and fourth products.

25. The method recited in Claim 16 wherein said plurality of user interfaces further comprises a local control element and a local storage element; and,
said method further comprising:
said interface control element accepting at least a portion of said control data from said central control element regarding control of said system in said location; and,
said local storage element storing at least a portion of said at least first portion of said retail data, where said steps of said interface control element accepting and said interface storage element accepting are performed by said general-purpose computer.

26. A method for managing data in a business entity using at least one computer, comprising:
storing in a central application product data regarding a plurality of products sold by said entity;
generating retail data regarding said product data in said central application;
accepting, in said central application, information from a first vendor regarding first and second products, where said first product is from said plurality of products, said first vendor supplies said first product to said entity, and said second product is associated with said first product; and,
selecting a third product from said plurality of products, said third product corresponding to said second product, where said steps of storing, generating, accepting, and selecting are performed by at least one general-purpose computer specially programmed to perform said steps of storing, generating, accepting, and selecting.

27. The method recited in Claim 26 further comprising the steps of:
correlating, in said retail data, said first and third products;
storing at least a portion of said product data in a local application linked to said central application, where said local application is associated with a location of said business;
modifying said local application at a local level;
linking a plurality of user interfaces, located in said location, to said local application; and,
said plurality of user interfaces displaying said correlated retail data regarding said first and third products, where said steps of correlating, storing, modifying, linking, and displaying are performed by said at least one general-purpose computer.

28. The method recited in Claim 27 wherein said entity comprises an employee and said local application comprises a publicly accessible level and respective security levels and wherein displaying said correlated retail data regarding said first and third products further comprises using said publicly accessible level; and,
said method further comprising:
said plurality of user interfaces exchanging employee information regarding said employee and vendor information regarding said first vendor, using said respective security levels, where said step of exchanging employee and vendor information is performed by said general-purpose computer.

29. The method recited in Claim 27 further comprising:
linking said central application to a supply chain database, said supply chain database storing supply chain information regarding at least a portion of products in said plurality of products; and,
said central application retrieving and storing said supply chain data, where said steps of linking, retrieving and storing are performed by said general-purpose computer.

30. The method recited in Claim 29 wherein said supply chain database is the Uniform Code Council UCCnet database.
